(19) Europäisches Patentamt
European Patent Office
Office européen des brevets

(11) **EP 4 507 356 A1**

(12) **EUROPEAN PATENT APPLICATION**
published in accordance with Art. 153(4) EPC

(43) Date of publication:
**12.02.2025 Bulletin 2025/07**

(21) Application number: **23795145.4**

(22) Date of filing: **19.04.2023**

(51) International Patent Classification (IPC):
**H04W 16/10** (2009.01)

(52) Cooperative Patent Classification (CPC):
**H04W 16/10**

(86) International application number:
**PCT/CN2023/089248**

(87) International publication number:
**WO 2023/207712 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210469096**

(71) Applicant: **Huawei Technologies Co., Ltd.
Shenzhen, Guangdong 518129 (CN)**

(72) Inventors:
• **XU, Jun
Shenzhen, Guangdong 518129 (CN)**
• **GAO, Junhui
Shenzhen, Guangdong 518129 (CN)**
• **JIN, Huangping
Shenzhen, Guangdong 518129 (CN)**

(74) Representative: **Grünecker Patent- und
Rechtsanwälte
PartG mbB
Leopoldstraße 4
80802 München (DE)**

(54) **METHOD AND APPARATUS FOR SENDING DEMODULATION REFERENCE SIGNAL**

(57) This application discloses a demodulation reference signal sending method and an apparatus, and relates to the communication field. The method includes: A terminal device receives indication information, where the indication information indicates an expansion manner of DMRS ports in at least one of a plurality of code division multiplexing CDM groups corresponding to one DMRS configuration type; and sends DMRSs via DMRS ports obtained through expansion in the at least one CDM group, where the DMRS ports in the at least one CDM group include legacy DMRS ports and expanded DMRS ports. In this way, the terminal device flexibly expands, based on the indication information, DMRS ports in the CDM group corresponding to the DMRS configuration type, and sends the DMRSs via the DMRS ports obtained through expansion in the CDM group. This ensures that the DMRS ports are orthogonal in different scenarios, and data at more layers is sent, thereby increasing a capacity of an NR system.

FIG. 1

## EP 4 507 356 A1

## Description

This application claims priority to Chinese Patent Application No. 202210469096.0, filed with the China National Intellectual Property Administration on April 29, 2022 and entitled "DEMODULATION REFERENCE SIGNAL SENDING METHOD AND APPARATUS", which is incorporated herein by reference in its entirety.

## TECHNICAL FIELD

This application relates to the field of wireless communication technologies, and in particular, to a demodulation reference signal sending method and an apparatus.

## BACKGROUND

To cope with explosive mobile data traffic growth, massive mobile communication device connections, and emerging new services and application scenarios in the future, a fifth generation (fifth generation, 5G) mobile communication system emerges. The 5G mobile communication system is also referred to as a new radio access technology (new radio access technology, NR) system.

In the NR system, a network device sends downlink data together with a demodulation reference signal (demodulation reference signal, DMRS or DM-RS) to a terminal device; or a terminal device sends uplink data together with a DMRS to a network device. The DMRS uses a same precoding matrix as the data. One DMRS port needs to be allocated to each layer of data on which layer mapping is performed, to transmit the DMRS, and an equivalent channel of the layer of data is estimated by using the DMRS. Currently, a plurality of layers of data may be sent based on a multiple-input multiple-output (multiple-input multiple-output, MIMO) technology, and a plurality of DMRS ports corresponding to the plurality of layers of data are orthogonal to each other.

With the development of the MIMO technology and an increase in a quantity of antennas at a receive end and a transmit end, to-be-sent data may be mapped to more layers after the layer mapping, to implement more efficient data transmission. In the conventional technology, a DMRS port design adapted to a small quantity of layers restricts data transmission efficiency. Therefore, how to design DMRS ports to adapt to more layers to increase a capacity of the NR system is an urgent problem to be resolved.

## SUMMARY

This application provides a demodulation reference signal sending method and an apparatus, to increase a quantity of layers for sending a data stream, and increase a capacity of an NR system.

According to a first aspect, a demodulation reference signal sending method is provided. The method may be applied to a terminal device, or the method may be applied to a communication apparatus that can support the terminal device in implementing the method. For example, the communication apparatus includes a chip system. The method includes: The terminal device receives indication information, where the indication information indicates an expansion manner of DMRS ports in at least one of a plurality of code division multiplexing (Code Division Multiplexing, CDM) groups corresponding to one DMRS configuration type; and sends DMRSs via DMRS ports obtained through expansion in the at least one CDM group, where the DMRS ports in the at least one CDM group include legacy (legacy) DMRS ports and expanded (expanded) DMRS ports. The DMRS is used to demodulate uplink data.

In this way, the terminal device flexibly expands, based on the indication information, DMRS ports in the CDM group corresponding to the DMRS configuration type, and sends the DMRSs via the DMRS ports obtained through expansion in the CDM group. This ensures that the DMRS ports are orthogonal in different scenarios, and data at more layers is sent, thereby increasing a capacity of an NR system.

According to a second aspect, a demodulation reference signal receiving method is provided. The method may be applied to a network device, or the method may be applied to a communication apparatus that can support the network device in implementing the method. For example, the communication apparatus includes a chip system. The method includes: The network device sends indication information, where the indication information indicates an expansion manner of DMRS ports in at least one of a plurality of CDM groups corresponding to one DMRS configuration type; and receives DMRSs via DMRS ports obtained through expansion in the at least one CDM group, where the DMRS ports in the at least one CDM group include legacy DMRS ports and expanded DMRS ports, and the DMRS is used to demodulate uplink data.

In this way, the network device indicates the terminal device to flexibly expand, based on the indication information, the CDM group corresponding to the DMRS configuration type, so that the network device receives the DMRSs via the DMRS ports obtained through expansion in the CDM group. This ensures that the DMRS ports are orthogonal in different scenarios, and data at more layers is received, thereby increasing a capacity of an NR system.

According to a third aspect, a demodulation reference signal receiving method is provided. The method may be applied to a terminal device, or the method may be applied to a communication apparatus that can support the terminal device in implementing the method. For example, the communication apparatus includes a chip system. The method includes: The terminal device receives indication information, where the indication information indicates an expansion manner of DMRS ports in at least one of a plurality of CDM groups corresponding to one DMRS configuration type; and receives DMRSs via DMRS ports obtained through expansion in the at least one CDM group, where the DMRS ports in the at least one CDM group include legacy DMRS ports and expanded DMRS ports, and the DMRS is used to demodulate downlink data.

In this way, the terminal device flexibly expands, based on the indication information, DMRS ports in the CDM group corresponding to the DMRS configuration type, and receives the DMRSs via the DMRS ports obtained through expansion in the CDM group. This ensures that the DMRS ports are orthogonal in different scenarios, and data at more layers is received, thereby increasing a capacity of an NR system.

According to a fourth aspect, a demodulation reference signal sending method is provided. The method may be applied to a network device, or the method may be applied to a communication apparatus that can support the network device in implementing the method. For example, the communication apparatus includes a chip system. The method includes: The network device sends indication information, where the indication information indicates an expansion manner of DMRS ports in at least one of a plurality of code division multiplexing CDM groups corresponding to one DMRS configuration type; and sends DMRSs via DMRS ports obtained through expansion in the at least one CDM group, where the DMRS ports in the at least one CDM group include legacy DMRS ports and expanded DMRS ports. The DMRS is used to demodulate downlink data.

In this way, the network device flexibly expands, based on the indication information, DMRS ports in the CDM group corresponding to the DMRS configuration type, so that the network device sends the DMRSs via the DMRS ports obtained through expansion in the CDM group. This ensures that the DMRS ports are orthogonal in different scenarios, and data at more layers is sent, thereby increasing a capacity of an NR system.

In a possible implementation, the expansion manner of DMRS ports in the CDM group is determined based on a delay spread (delay spread) of a channel of a to-be-scheduled terminal device.

When delay spreads of channels of all to-be-scheduled terminal devices are less than a first threshold, the expansion manner indicates to expand DMRS ports in all the CDM groups corresponding to the DMRS configuration type, and the channels include an uplink channel and a downlink channel; or when a delay spread of a channel of a part of the to-be-scheduled terminal devices is greater than or equal to a first threshold, the expansion manner indicates to expand DMRS ports in a part of the plurality of CDM groups corresponding to the DMRS configuration type.

In an example, the DMRS configuration type includes a first configuration type.

For example, when the delay spreads of the channels of all the to-be-scheduled terminal devices are less than the first threshold, DMRS ports in each of two CDM groups corresponding to the first configuration type are expanded by two times.

For another example, when the delay spread of the channel of the part of the to-be-scheduled terminal devices is greater than or equal to the first threshold, in a first CDM group and a second CDM group that correspond to the first configuration type, DMRS ports in the first CDM group are expanded by three times, and DMRS ports in the second CDM group are not expanded.

In another example, the DMRS configuration type further includes a second configuration type.

For example, when the delay spreads of the channels of all the to-be-scheduled terminal device are less than the first threshold, DMRS ports in each of three CDM groups corresponding to the second configuration type are expanded by two times.

For another example, when a delay spread of a channel of a first part of the to-be-scheduled terminal devices is greater than or equal to the first threshold and less than a second threshold, and a delay spread of a channel of a second part of the terminal devices is greater than or equal to the second threshold, in a third CDM group, a fourth CDM group, and a fifth CDM group that correspond to the second configuration type, DMRS ports in the third CDM group are expanded by three times, DMRS ports in the fourth CDM group are expanded by two times, and DMRS ports in the fifth CDM group are not expanded, where the first threshold is less than the second threshold.

For another example, when a delay spread of a channel of a first part of the to-be-scheduled terminal devices is greater than or equal to a second threshold, and a delay spread of a channel of a second part of the terminal devices is less than the first threshold, in a third CDM group, a fourth CDM group, and a fifth CDM group that correspond to the second configuration type, DMRS ports in the third CDM group are expanded by four times, and neither DMRS ports in the fourth CDM group nor DMRS ports in the fifth CDM group are expanded, where the first threshold is less than the second threshold.

Because DMRS ports in a CDM group without expanding DMRS ports have a long delay domain interval, even if the DMRS ports are allocated to a terminal device with a large channel delay spread, orthogonality of the DMRS ports can be ensured to some extent. In addition, DMRS ports in a CDM group with expanding DMRS ports have a short delay domain interval, and need to be allocated to a terminal device with a small channel delay spread to ensure orthogonality of the DMRS ports to some extent. Therefore, the DMRS ports in the CDM group without expanding DMRS ports are preferentially allocated to the terminal device with a large delay spread, and the DMRS ports in the CDM group with expanding DMRS ports are allocated to the terminal device with a small delay spread.

In another possible implementation, the indication information indicates a value of M and a value of m in a coefficient $e^{j2\hat{k}\pi m/M}$; the indication information indicates a value of m/M in a coefficient $e^{j2\hat{k}\pi m/M}$; or the indication information indicates a value of a coefficient $e^{j2\hat{k}\pi m/M}$. The coefficient $e^{j2\hat{k}\pi m/M}$ is used to generate a DMRS sequence.

In another possible implementation, the indication information is predefined; or the indication information is configured by using control signaling, and the control signaling includes at least one of radio resource control (radio resource control, RRC) signaling, a media access control control element (Media Access Control Control Element, MAC-CE), and downlink control information (downlink control information, DCI).

According to a fifth aspect, a communication apparatus is provided. For beneficial effects, refer to the descriptions in the first aspect. Details are not described herein again. The communication apparatus has a function of implementing the behavior in the method embodiment in the first aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to: receive indication information, and send DMRSs via DMRS ports obtained through expansion in at least one CDM group. The indication information indicates an expansion manner of DMRS ports in the at least one of a plurality of CDM groups corresponding to one DMRS configuration type. The DMRS ports in the at least one CDM group include legacy DMRS ports and expanded DMRS ports. The processing unit is configured to determine, based on the indication information, the expansion manner of DMRS ports in the at least one of the plurality of CDM groups corresponding to one DMRS configuration type. These modules may perform corresponding functions in the method example in the first aspect. For details, refer to the detailed descriptions in the method example. Details are not described herein again.

According to a sixth aspect, a communication apparatus is provided. For beneficial effects, refer to the descriptions in the second aspect. Details are not described herein again. The communication apparatus has a function of implementing the behavior in the method embodiment in the second aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to: send indication information, and receive DMRSs via DMRS ports obtained through expansion in at least one CDM group. The indication information indicates an expansion manner of DMRS ports in the at least one of a plurality of CDM groups corresponding to one DMRS configuration type. The DMRS ports in the at least one CDM group include legacy DMRS ports and expanded DMRS ports. The DMRS is used to demodulate uplink data. The processing unit is configured to determine the expansion manner of DMRS ports in the at least one of the CDM groups corresponding to the DMRS configuration type. These modules may perform corresponding functions in the method example in the second aspect. For details, refer to the detailed descriptions in the method example. Details are not described herein again.

According to a seventh aspect, a communication apparatus is provided. For beneficial effects, refer to the descriptions in the third aspect. Details are not described herein again. The communication apparatus has a function of implementing the behavior in the method embodiment in the third aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to: receive indication information, and receive DMRSs via DMRS ports obtained through expansion in at least one CDM group. The indication information indicates an expansion manner of DMRS ports in the at least one of a plurality of CDM groups corresponding to one DMRS configuration type. The DMRS ports in the at least one CDM group include legacy DMRS ports and expanded DMRS ports. The DMRS is used to demodulate downlink data. The processing unit is configured to determine, based on the indication information, the expansion manner of DMRS ports in the at least one of the CDM groups corresponding to the DMRS configuration type. These modules may perform corresponding functions in the method example in the third aspect. For details, refer to the detailed descriptions in the method example. Details are not described herein again.

According to an eighth aspect, a communication apparatus is provided. For beneficial effects, refer to the descriptions in the fourth aspect. Details are not described herein again. The communication apparatus has a function of implementing the behavior in the method embodiment in the fourth aspect. The function may be implemented by hardware, or may be implemented by hardware executing corresponding software. The hardware or the software includes one or more modules corresponding to the foregoing function. In a possible design, the communication apparatus includes a transceiver unit and a processing unit. The transceiver unit is configured to: send indication information, and send DMRSs via DMRS ports obtained through expansion in at least one CDM group. The indication information indicates an expansion manner of DMRS ports in the at least one of a plurality of CDM groups corresponding to one DMRS configuration type. The DMRS ports in the at least one CDM group include legacy DMRS ports and expanded DMRS ports. The processing unit is configured to determine the expansion manner of DMRS ports in the at least one of the CDM groups corresponding to the DMRS configuration type. These modules may perform corresponding functions in the method example in the fourth aspect. For details, refer to the detailed descriptions in the method example. Details are not described herein again.

According to a ninth aspect, a communication apparatus is provided. The communication apparatus may be the terminal device in the foregoing method embodiment, or may be a chip disposed in the terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiment.

According to a tenth aspect, a communication apparatus is provided. The communication apparatus may be the network device in the foregoing method embodiment, or may be a chip disposed in the network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the network device in the foregoing method embodiment.

According to an eleventh aspect, a computer program product is provided. The computer program product includes computer program code. When the computer program code is run, the method performed by the terminal device in the foregoing aspects is performed.

According to a twelfth aspect, a computer program product is provided. The computer program product includes computer program code. When the computer program code is run, the method performed by the network device in the foregoing aspects is performed.

According to a thirteenth aspect, a chip system is provided. The chip system includes a processor, configured to implement the functions of the terminal device in the method in the foregoing aspects. In a possible design, the chip system further includes a memory, configured to store program instructions and/or data. The chip system may include a chip, or may include a chip and another discrete component.

According to a fourteenth aspect, a chip system is provided. The chip system includes a processor, configured to implement the functions of the network device in the method in the foregoing aspects. In a possible design, the chip system further includes a memory, configured to store program instructions and/or data. The chip system may include a chip, or may include a chip and another discrete component.

According to a fifteenth aspect, a computer-readable storage medium is provided. The computer-readable storage medium stores a computer program. When the computer program is run, the method performed by the terminal device in the foregoing aspects is implemented.

According to a sixteenth aspect, this application provides a computer-readable storage medium. The computer-readable storage medium stores a computer program. When the computer program is run, the method performed by the network device in the foregoing aspects is implemented.

According to a seventeenth aspect, this application provides a communication system. The communication system includes the terminal device described in the fifth aspect or the communication apparatus that supports the terminal device in implementing the method described in the first aspect and the network device described in the sixth aspect or the communication apparatus that supports the network device in implementing the method described in the second aspect.

Alternatively, the communication system includes the terminal device described in the seventh aspect or the communication apparatus that supports the terminal device in implementing the method described in the third aspect and the network device described in the eighth aspect or the communication apparatus that supports the network device in implementing the method described in the fourth aspect.

Alternatively, the communication system includes the terminal device described in the ninth aspect or the communication apparatus that supports the terminal device in implementing the method described in the first aspect or the third aspect and the network device described in the tenth aspect or the communication apparatus that supports the network device in implementing the method described in the second aspect or the fourth aspect.

In this application, names of the terminal device, the network device, and the communication apparatus constitute no limitation on the devices. During actual implementation, the devices may have other names. Provided that functions of the devices are similar to those in this application, the devices fall within the scope of the claims of this application and equivalent technologies thereof.

In this application, based on the implementations according to the foregoing aspects, the implementations may be further combined to provide more implementations.

## BRIEF DESCRIPTION OF DRAWINGS

FIG. 1 is a diagram of a codeword processing process according to an embodiment of this application;
FIG. 2 is a diagram of a DMRS mapping type according to an embodiment of this application;
FIG. 3 is a diagram of a DMRS configuration type according to an embodiment of this application;
FIG. 4 is a diagram of an architecture of a mobile communication system according to an embodiment of this application;
FIG. 5 is a flowchart of a demodulation reference signal sending and receiving method according to an embodiment of this application;
FIG. 6 is a diagram of a type 1 DMRS port expansion solution according to an embodiment of this application;
FIG. 7 is a diagram of another type 1 DMRS port expansion solution according to an embodiment of this application;
FIG. 8 is a diagram of a type 2 DMRS port expansion solution according to an embodiment of this application;
FIG. 9 is a diagram of another type 2 DMRS port expansion solution according to an embodiment of this application;
FIG. 10 is a diagram of another type 2 DMRS port expansion solution according to an embodiment of this application;
FIG. 11 is a diagram of a structure of a communication apparatus according to an embodiment of this application; and
FIG. 12 is a diagram of a structure of another communication apparatus according to an embodiment of this application.

## DESCRIPTION OF EMBODIMENTS

A process in which a network device sends data to a terminal device may be referred to as downlink transmission. A process in which the terminal device sends data to the network device may be referred to as uplink transmission. Generally, before data transmission, the network device or the terminal device performs verification code addition, code block segmentation, channel coding (channel coding), rate matching (rate matching), code block concatenation, scrambling (scrambling), modulation (modulation), layer mapping (layer mapping), and multi-antenna precoding (multi-antenna precoding) on an original bit in a transport block (transport block, TB), to generate a baseband signal and map the baseband signal to an antenna for sending.

The layer mapping is to perform code block concatenation on a code block on which rate matching is performed, to obtain a codeword (codeword), and map a modulation symbol obtained by performing scrambling and modulation on the codeword to a plurality of layers, to obtain a new data stream. In an NR system, a maximum of two codewords can be processed in parallel, in other words, two transport blocks are processed to codewords in parallel. A layer mapping process includes layer mapping of one codeword and layer mapping of two codewords. One codeword is a single-codeword stream. Two codewords are a dual-codeword stream. The single-codeword stream can be mapped to a maximum of four layers, and the dual-codeword stream can be mapped to a maximum of eight layers.

The multi-antenna precoding is to map N layers (layers) of data streams to N antenna ports (antenna ports) based on a precoding matrix (precoding matrix). In other words, an output vector of each layer is multiplied by one precoding matrix to obtain a precoding result. A quantity of layers is in one-to-one correspondence with a quantity of antenna ports. The quantity of layers may alternatively be described as "a quantity of transport layers".

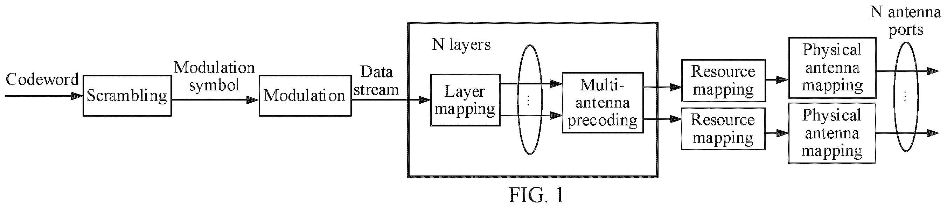

Objectives of the layer mapping and the multi-antenna precoding are to map the codeword to the antenna port. After the multi-antenna precoding, resource mapping of a resource element (Resource Element, RE) and mapping of a physical antenna (physical antenna) are performed. FIG. 1 is a diagram of a codeword processing process according to an embodiment of this application. It should be noted that, in addition to frequency domain diversity and time domain diversity, space diversity is added to a multi-antenna system, in other words, different data streams are transmitted through different "paths". A quantity of physical antennas is an actual quantity of antennas in the multi-antenna system and determines a theoretical upper limit of the space diversity. However, if "paths" formed by different physical antennas are excessively close, the space diversity is meaningless. In this case, the different physical antennas are one path. Therefore, a quantity of antenna ports is an actual quantity of "paths". The quantity of antenna ports is less than or equal to the quantity of physical antennas. The antenna ports and the physical antennas are not in one-to-one correspondence, and may be in one-to-many or many-to-one correspondence.

To improve uplink transmission performance and downlink transmission performance, data demodulation performance of a receiver needs to be improved. The performance of the receiver depends on precision of equivalent channel estimation. An equivalent channel is a result of a product of a channel matrix and a precoding matrix. In an NR system, the receiver uses a demodulation reference signal (Demodulation Reference Signal, DMRS) to perform uplink and downlink equivalent channel estimation and demodulate data. One DMRS port needs to be allocated to each layer of data on which layer mapping is performed, and the DMRS is sent based on a DMRS port on which multi-antenna precoding is performed, so that after receiving the DMRS, the receiver estimates an equivalent channel of the layer of data and demodulates the data. Therefore, the DMRS and the data are sent together, and multi-antenna precoding is performed on the DMRS by using a same precoding matrix as the data. There is a one-to-one correspondence between the DMRS, a quantity of layers, and the DMRS port.

A network device may indicate a time-frequency resource on which a terminal device receives a DMRS, so that the terminal device receives the DMRS on the time-frequency resource that is for the DMRS and that is indicated by the network device, estimates a downlink equivalent channel by using the DMRS, and demodulates received downlink data sent by the network device. The network device may indicate a time-frequency resource on which the terminal device sends a DMRS, and the terminal device sends the DMRS on the time-frequency resource that is for the DMRS and that is indicated by the network device, so that the network device receives the DMRS on the indicated time-frequency resource for the DMRS, estimates an uplink equivalent channel by using the DMRS, and demodulates received uplink data sent by the terminal device.

To meet different deployment scenarios, the DMRS includes two different time domain mapping types (mapping types): a mapping type A (Type A) and a mapping type B (Type B). A main difference between the two time domain types lies in positions of $1^{st}$ symbols that carry DMRSs and that are in resource blocks (resource blocks, RBs), that is, time domain start positions of the DMRSs in the RBs are different.

In a DMRS time domain structure of the mapping type A, the $1^{st}$ symbol that carries the DMRS and that is in the RB is located in a symbol (symbol) #2 or a symbol #3 in a slot. In this mapping manner, the DMRS is fixedly placed at a relative edge position of the slot, regardless of a start position of actual data transmission. For example, the DMRS is located after a physical downlink control channel (physical downlink control channel, PDCCH). The mapping type A is mainly used in a scenario in which the data transmission occupies most symbols of the slot.

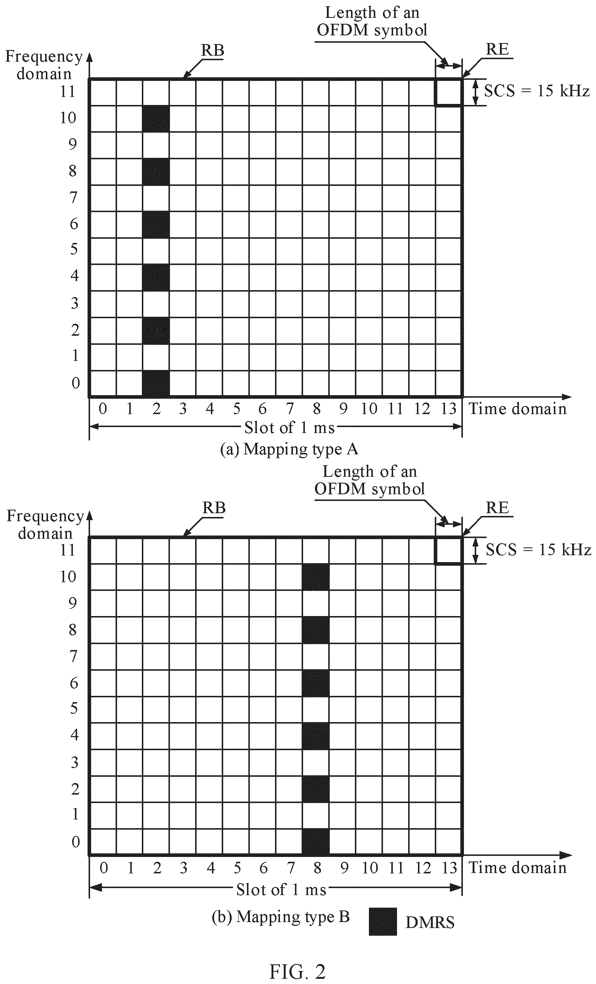

For example, (a) in FIG. 2 is a diagram of the DMRS mapping type A according to an embodiment of this application. A minimum unit in frequency domain is a subcarrier, and a bandwidth may be 15 kHz. A minimum unit in time domain is a slot (slot), and one slot may be 1 millisecond (millisecond, ms). Each small box in a time-frequency resource grid represents one RE, a bandwidth of one RE in frequency domain is 15 kHz, and a length of one RE in time domain is one OFDM symbol. One RB consists of 12 consecutive subcarriers in frequency domain and one slot in time domain. In a case of a normal cyclic prefix (normal cyclic prefix, NCP), one slot includes 14 OFDM symbols. The $1^{st}$ symbol that carries the DMRS and that is in the RB is located in the symbol #2 in the slot.

In the NR system, the DMRS may be located in a front symbol in the resource block (resource block, RB), that is, is a front-loaded DMRS, and helps the system obtain a lower processing delay. In this way, the receiver may perform channel estimation as early as possible. Regardless of whether the transmission ends, the receiver may perform related demodulation on received data that has been buffered, and does not need to receive or buffer all the data before processing.

If a mapping type indicated by the network device is the mapping type A, the time domain start position of the DMRS is relative to a start position of the slot, and a master information block (master information block, MIB) message parameter dmrs-TypeA-Position indicates the time domain start position of the DMRS. For example, if dmrs-TypeA-Position = pos2, the time domain start position of the DMRS starts from the symbol #2 of the slot. For another example, if dmrs-TypeA-Position = pos3, the time domain start position of the DMRS starts from the symbol #3 of the slot.

In a DMRS time domain structure of the mapping type B, the $1^{st}$ symbol that carries the DMRS and that is in the RB is fixedly mapped to a $1^{st}$ symbol of a data transmission resource (for example, a PDSCH). In this case, the time domain start position of the DMRS is not a start position symbol #0 relative to the slot, but a start position relative to the data transmission resource. The mapping type B is mainly used in a scenario in which the data transmission occupies only a small part of symbols in one slot, to reduce a transmission delay.

For example, (b) in FIG. 2 is a diagram of the DMRS mapping type B according to an embodiment of this application. The $1^{st}$ symbol that carries the DMRS and that is in the RB is located in a symbol #8 in the slot.

After determining the DMRS mapping type, the network device may determine a DMRS configuration type (configuration type), in other words, determine a frequency domain resource of the DMRS. The DMRS includes two different configuration types: a configuration type 1 (type 1) and a configuration type 2 (type 2).

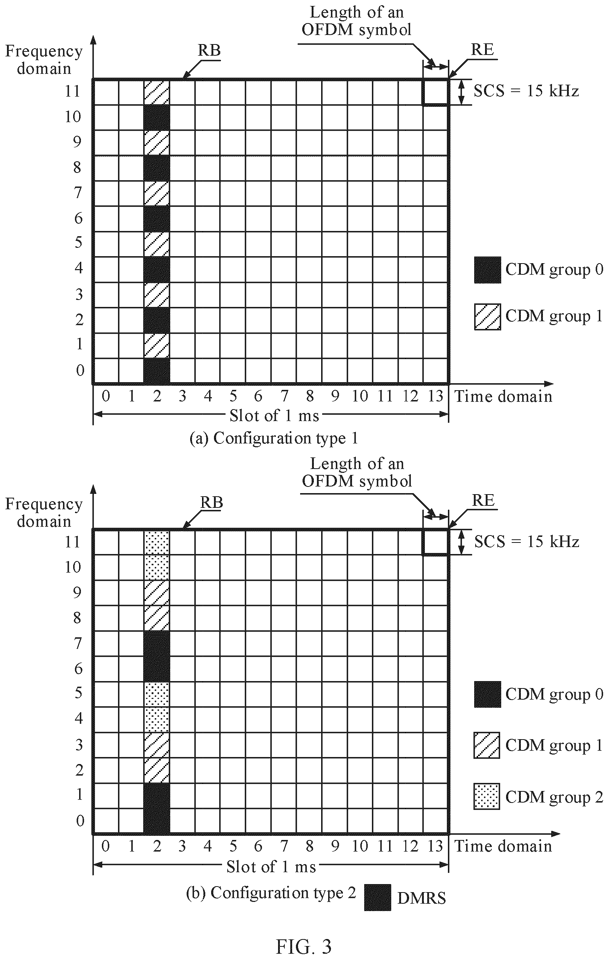

(a) in FIG. 3 is a diagram of a DMRS type 1 according to an embodiment of this application. Frequency domain resources of the DMRS are distributed at an interval of one RE in frequency domain of one symbol, and density is 50%. Currently, it is specified, in 3GPP TS 38.211 V16.7.0, that an RE on an even-numbered subcarrier can provide two orthogonal DMRS ports. An RE on an odd-numbered subcarrier can also provide two orthogonal DMRS ports. A plurality of DMRS ports using a same subcarrier belong to a same code division multiplexing (Code Division Multiplexing, CDM) group. The type 1 corresponds to two CDM groups, for example, a CDM group 0 and a CDM group 1. In a single-symbol mode, each CDM group may provide two orthogonal DMRS ports. In a double-symbol mode, each CDM group may provide four orthogonal DMRS ports. Because DMRS sequences corresponding to DMRS ports in different CDM groups occupy different frequency domain resources, the DMRS sequences are orthogonal to each other. DMRS sequences corresponding to different DMRS ports in a same CDM group occupy a same time-frequency resource, and the DMRS sequences corresponding to these ports are orthogonal to each other by using an orthogonal cover code (orthogonal cover code, OCC).

(b) in FIG. 3 is a diagram of a DMRS type 2 according to an embodiment of this application. For frequency domain resources of the DMRS, there are four REs between every two consecutive REs in frequency domain of one symbol, and density is 33.3%. The type 2 corresponds to three CDM groups, for example, a CDM group 0, a CDM group 1, and a CDM group 2. DMRS sequences corresponding to different DMRS ports in each CDM group are also orthogonal by using an OCC code. In the type 1, each DMRS port occupies frequency domain resources with higher density, and channel estimation performance is better. The type 2 supports more orthogonal DMRS ports, and can support transmission of more layers of data. Each DMRS port is identified by using one port number. A time-frequency resource position occupied by a DMRS sequence is determined by a port number and a configuration type (the type 1 or the type 2). The configuration type is indicated to the terminal device by using a higher layer signaling radio resource control (radio resource control, RRC) parameter, and the port number is indicated to the terminal device by using an antenna port (antenna port) field in downlink control information (downlink control information, DCI).

Signal multipath fading is caused by a multipath environment of a channel for data transmission between the network device and the terminal device. Arrival time of a signal varies with a length of each path. When a transmit end sends a pulse signal, a received signal received by a receive end includes not only the pulse signal, but also each delay signal of the pulse signal. This phenomenon of expanding a pulse width of the received signal due to a multi-path effect is referred to as a delay spread. A limit of a multipath delay for digital signal transmission is a digital signal periodicity. Otherwise, waveform broadening will cause intersymbol interference of digital signals.

An embodiment of this application provides a DMRS sending method. A network device first flexibly determines an expansion manner of DMRS ports based on channel information of all currently scheduled terminal devices; and then configures an expansion manner of DMRS ports for each terminal device, and indicates a DMRS sequence generation manner, so that the terminal device receives or sends DMRSs via DMRS ports obtained through expansion in a CDM group. In the method, an expansion manner of DMRS ports in each CDM group is flexibly selected, so that DMRS port orthogonal expansion is ensured in different scenarios, to implement robust channel estimation and data demodulation. The channel information in the method may be a delay spread, or may be other channel information. This is not limited in this application. For ease of description, the following uses a delay spread of a channel as an example for description.

The following describes the implementations of embodiments of this application in detail with reference to the accompanying drawings.

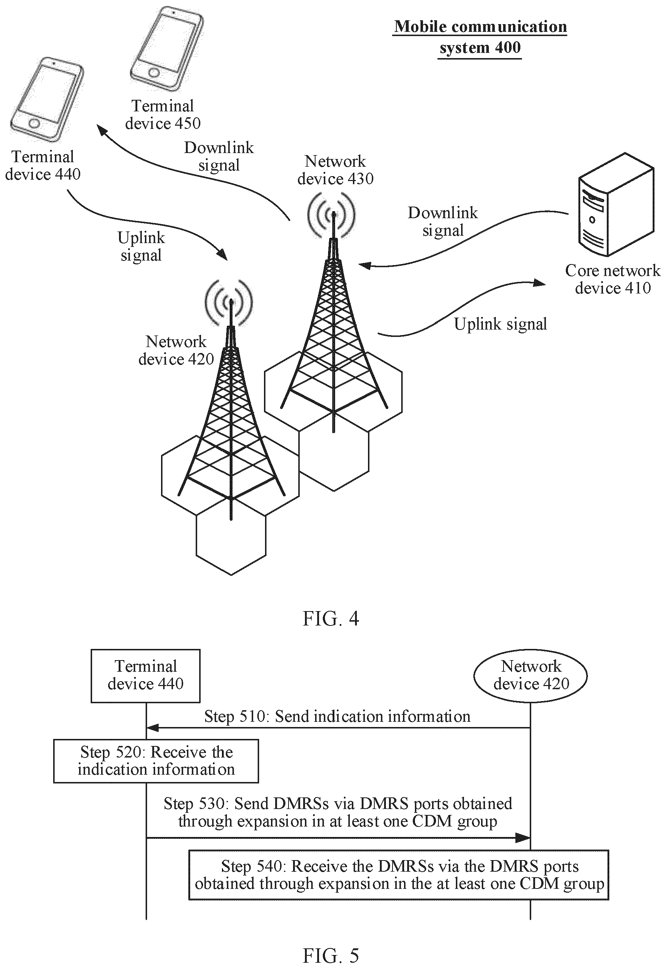

FIG. 4 is a diagram of an architecture of a mobile communication system used in an embodiment of this application. As shown in FIG. 3, the mobile communication system 400 includes a core network device 410, a network device 420, a network device 430, a terminal device 440, and a terminal device 450. The terminal device is connected to the network device in a wireless manner, and the network device is connected to the core network device in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. The terminal device may be located at a fixed position, or may be mobile. FIG. 4 is merely an example diagram. The communication system may further include another network device, for example, may further include a wireless relay device and a wireless backhaul device. This is not shown in FIG. 4. Quantities of core network devices, network devices, and terminal devices included in the mobile communication system are not limited in embodiments of this application.

The network device is an access device that is used by the terminal device to access the mobile communication system in a wireless manner, and may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. The network device may alternatively be a module or a unit that completes some functions of the base station, for example, may be a central unit (central unit, CU), or may be a distributed unit (distributed unit, DU). A specific technology and a specific device form that are used by the network device are not limited in embodiments of this application. The network device may also be referred to as a radio access network device. Unless otherwise specified, the network device is the radio access network device. For example, the network device 420 may be referred to as a radio access network device 420. The network device 430 may be referred to as a radio access network device 430.

The terminal device may also be referred to as a terminal, user equipment (user equipment, UE), a mobile station, a mobile terminal, or the like. The terminal device may be a mobile phone, a tablet computer (Pad), a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in embodiments of this application.

The plurality of terminal devices included in the mobile communication system 400 may send uplink data to the network device. The uplink data sent by the terminal device may be received by one of the network devices, or may be jointly received by two network devices. Alternatively, the network device may send downlink data to the plurality of terminal devices.

Embodiments of this application may include a plurality of communication systems including a 5G new radio (new radio, NR) system, provided that in the communication system, an entity needs to send transmission direction indication information, and another entity needs to receive the indication information and determine a transmission direction within specific time based on the indication information.

The network device and the terminal device may be deployed on the land, including an indoor device, an outdoor device, a handheld device, or a vehicle-mounted device; may be deployed on the water surface; or may be deployed on a plane, a balloon, and a satellite in the air. An application scenario of the network device and the terminal device is not limited in embodiments of this application.

The network device and the terminal device may communicate with each other over a licensed spectrum (licensed spectrum), or may communicate with each other over an unlicensed spectrum (unlicensed spectrum), or may communicate with each other over both the licensed spectrum and the unlicensed spectrum. The network device and the terminal device may communicate with each other over a spectrum below 6 gigahertz (gigahertz, GHz), may communicate with each other over a spectrum above 6 GHz, or may communicate with each other over both the spectrum below 6 GHz and the spectrum above 6 GHz. A spectrum resource used between the network device and the terminal device is not limited in embodiments of this application.

In embodiments of this application, a time domain symbol may be an orthogonal frequency division multiplexing (orthogonal frequency division multiplexing, OFDM) symbol, or may be a single carrier-frequency division multiplexing (single carrier-frequency division multiplexing, SC-FDM) symbol. Unless otherwise specified, a symbol in embodiments of this application is a time domain symbol.

It may be understood that, in embodiments of this application, a physical uplink shared channel (physical uplink shared channel, PUSCH) and a PDSCH are merely used as examples of an uplink data channel and a downlink data channel. In different systems and different scenarios, a data channel may have different names. This is not limited in embodiments of this application.

Next, FIG. 5 is a flowchart of a demodulation reference signal sending and receiving method according to an embodiment of this application. Herein, an example in which a terminal device 440 sends uplink data to a network device 430 is used to describe a demodulation reference signal sending process. As shown in FIG. 5, the method may include the following steps.

Step 510: The network device 420 sends indication information to the terminal device 440.

The network device 420 may determine an expansion manner of DMRS ports based on delay spreads of uplink channels (for example, PUSCHs) of all currently scheduled terminal devices (for example, the terminal device 440).

Configuration type 1 (type 1) DMRS port expansion

In a possible manner, when the delay spreads of the uplink channels of all the currently scheduled terminal devices are less than a first threshold, DMRS port expansion multiples of two CDM groups are the same. It may be understood that the expansion manner indicates to perform uniform DMRS port expansion on the two CDM groups. For example, DMRS ports in each of the two CDM groups are expanded by two times.

In another possible manner, when delay spreads of uplink channels of some terminal devices in all the currently scheduled terminal devices are greater than or equal to a first threshold, two CDM groups use different DMRS port expansion multiples. It may be understood that the expansion manner indicates to perform non-uniform DMRS port expansion on the two CDM groups. For example, DMRS ports in a first CDM group are expanded by three times, and DMRS ports in a second CDM group are expanded by one time, that is, not expanded.

Configuration type 2 (type 2) DMRS port expansion

In a possible manner, when the delay spreads of the uplink channels of all the currently scheduled terminal devices are less than a first threshold, DMRS port expansion multiples of three CDM groups are the same. It may be understood that the expansion manner indicates to perform uniform DMRS port expansion on the three CDM groups. For example, DMRS ports in each of the three CDM groups are expanded by two times.

In another possible manner, when a delay spread of an uplink channel of a part of all the currently scheduled terminal devices is greater than or equal to a first threshold and less than a second threshold, and delay spreads of uplink channels of all other terminal devices are greater than or equal to the second threshold, three CDM groups use different DMRS port expansion multiples. It may be understood that the first threshold is less than the second threshold, and the expansion manner indicates to perform non-uniform DMRS port expansion on the three CDM groups. For example, DMRS ports in a third CDM group are expanded by three times, DMRS ports in a fourth CDM group are expanded by two times, and DMRS ports in a fifth CDM group are expanded by one time, that is, not expanded. For example, all the currently scheduled terminal devices include a terminal device 1, a terminal device 2, and a terminal device 3. A delay spread of an uplink channel of the terminal device 1 is greater than or equal to the first threshold and is less than the second threshold, a delay spread of an uplink channel of the terminal device 2 is greater than or equal to the second threshold, and a delay spread of an uplink channel of the terminal device 3 is greater than or equal to the second threshold. The three CDM groups include a CDM group 0, a CDM group 1, and a CDM group 2. DMRS ports in the CDM group 0 are expanded by three times, DMRS ports in the CDM group 1 are expanded by two times, and DMRS ports in the CDM group 2 are expanded by one time.

In another possible manner, when a delay spread of an uplink channel of a part of all the currently scheduled terminal devices is greater than or equal to a second threshold, and delay spreads of uplink channels of all other terminal devices are less than a first threshold, three CDM groups use different DMRS port expansion multiples. It may be understood that the first threshold is less than the second threshold, and the expansion manner indicates to perform non-uniform DMRS port expansion on the three CDM groups. For example, the third CDM group uses a DMRS port expansion multiple of 4, and both the fourth CDM group and the fifth CDM group use a DMRS port expansion multiple of 1, that is, are not expanded. For example, all the currently scheduled terminal devices include a terminal device 1, a terminal device 2, and a terminal device 3. A delay spread of an uplink channel of the terminal device 1 is greater than or equal to the second threshold, a delay spread of an uplink channel of the terminal device 2 is less than the first threshold, and a delay spread of an uplink channel of the terminal device 3 is less than the first threshold. The three CDM groups include a CDM group 0, a CDM group 1, and a CDM group 2. DMRS ports in the CDM group 0 are expanded by four times, DMRS ports in the CDM group 1 are expanded by one time, and DMRS ports in the CDM group 2 are expanded by one time.

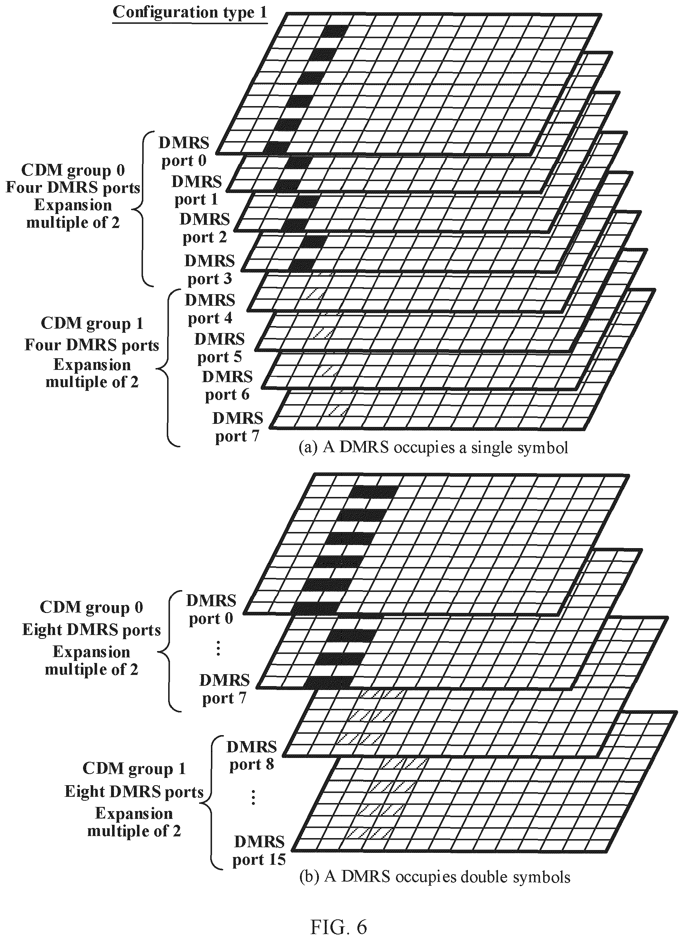

The expansion manners of DMRS ports of two configuration types are described in the following examples in FIG. 6 to FIG. 10.

It should be noted that expanding DMRS ports in a CDM group may be understood as expanding a quantity of DMRS ports in the CDM group.

Because DMRS ports in a CDM group without expanding DMRS ports have a long delay domain interval, even if the DMRS ports are allocated to a terminal device with a large channel delay spread, orthogonality of the DMRS ports can be ensured to some extent. In addition, DMRS ports in a CDM group with expanding DMRS ports have a short delay domain interval, and need to be allocated to a terminal device with a small channel delay spread to ensure orthogonality of the DMRS ports to some extent. Therefore, the network device may preferentially allocate, to the terminal device with a large delay spread, the DMRS ports in the CDM group without expanding DMRS ports, and allocate, to the terminal device with a small delay spread, the DMRS ports in the CDM group with expanding DMRS ports.

For example, DMRS ports in the CDM group 0 include legacy DMRS ports and expanded DMRS ports, and DMRS ports in the CDM group 1 include legacy DMRS ports and include no expanded DMRS port. The terminal device 0 with a small channel delay spread preferentially uses the DMRS ports in the CDM group 0, and the terminal device 1 with a large channel delay spread preferentially uses the DMRS ports in the CDM group 1.

In this way, the network device allocates DMRS ports in CDM groups with different expansion multiples to terminal devices with different delay spreads, so that orthogonality of the DMRS ports obtained through expansion can be ensured when the delay spreads of all the currently scheduled terminal devices are small, and orthogonality of the DMRS ports obtained through expansion can also be ensured when a delay spread of a part of the terminal devices is large.

The indication information indicates an expansion manner of DMRS ports in at least one of CDM groups corresponding to one DMRS configuration type. The indication information may include first information or second information. The first information indicates to expand DMRS ports in all the CDM groups corresponding to the DMRS configuration type. The second information indicates to expand DMRS ports in a part of the CDM groups corresponding to the DMRS configuration type. For example, the first information includes that DMRS port expansion multiples of all the CDM groups corresponding to the DMRS configuration type are the same. The second information includes a DMRS port expansion multiple of the part of all the CDM groups corresponding to the DMRS configuration type. The second information may indicate different expansion multiples, and the different expansion multiples may indicate different expansion manners.

In some embodiments, the network device 420 configures the indication information for the terminal device by using control signaling, to indicate the expansion manner of DMRS ports in the at least one of the CDM groups corresponding to the DMRS configuration type.

Example 1: The network device 420 may send downlink control information (downlink control information, DCI) to different terminal devices, to configure expansion manners of DMRS ports in CDM groups for the terminal devices. The DCI may include the indication information indicating a DMRS port via which the terminal device receives a DMRS sequence.

For example, a type 1 includes two expansion manners of DMRS ports: a uniform expansion manner and a non-

EP 4 507 356 A1

uniform expansion manner. In this case, one bit in the DCI may indicate the expansion manners of DMRS ports in the CDM groups. For example, if a value of the bit is 0, it indicates that DMRS port expansion multiples of all the CDM groups corresponding to the type 1 are the same. If a value of the bit is 1, it indicates to expand DMRS ports in a part of all the CDM groups corresponding to the type 1.

For another example, a type 2 includes three expansion manners of DMRS ports: a uniform expansion manner, a non-uniform expansion manner 1, and a non-uniform expansion manner 2. In this case, two bits in the DCI may indicate the expansion manners of DMRS ports in the CDM groups. For example, if a value of the bit is 00, it indicates that DMRS port expansion multiples of all the CDM groups corresponding to the type 2 are the same. If a value of the bit is 01, it indicates to expand DMRS ports in two of all the CDM groups corresponding to the type 2. If a value of the bit is 10, it indicates to expand DMRS ports in one of all the CDM groups corresponding to the type 2.

Example 2: The network device 420 may further send radio resource control (radio resource control, RRC) signaling to different terminal devices, to configure expansion manners of DMRS ports in CDM groups for the terminal devices. The RRC signaling may include the indication information indicating a DMRS port via which the terminal device receives a DMRS sequence.

In some other embodiments, the network device 420 may further send the indication information to different terminal devices in a broadcast manner.

The foregoing manners of sending the indication information are some examples for description, and the manners of sending the indication information are not limited in this embodiment of this application.

Step 520: The terminal device 440 receives the indication information sent by the network device 420.

Step 530: The terminal device 440 sends DMRSs via DMRS ports obtained through expansion in at least one CDM group.

The terminal device 440 first determines time-frequency resource positions and the DMRS ports that are for sending the DMRSs, and a time-frequency resource position for sending uplink data. Further, the DMRSs are sent at the time-frequency resource positions of the DMRSs via the DMRS ports that are of the CDM group and that are indicated, and the uplink data is sent based on a time-frequency resource other than time-frequency resources occupied by the DMRSs in an RB.

The terminal device 440 may determine, based on a mapping type of the DMRS and a time domain position of the DMRS, a time domain resource position for sending the DMRS. The terminal device 440 may determine, based on the DMRS configuration type, a frequency domain resource position for sending the DMRS.

For example, the terminal device 440 may obtain the mapping type of the DMRS, the time domain resource position of the DMRS, and the DMRS configuration type by searching a table or by using a parameter in the RRC signaling. The mapping type of the DMRS includes a mapping type A and a mapping type B. The DMRS configuration type includes a configuration type 1 and a configuration type 2. For related explanations of the mapping type of the DMRS and the DMRS configuration type, refer to the descriptions in step 510.

The terminal device 440 may determine the expansion manner of DMRS ports in the at least one CDM group based on the indication information sent by the network device 420, so that the terminal device 440 sends the DMRSs via the DMRS ports obtained through expansion in the at least one CDM group. The DMRS ports in the at least one CDM group include legacy DMRS ports and expanded DMRS ports. The legacy DMRS port may be a port specified in 3GPP TS 38.211 V16.7.0. The expanded DMRS port may be a DMRS port that is expanded based on the expansion manner indicated by the indication information.

For example, the indication information includes the first information, and the terminal device 440 determines to expand DMRS ports in all the CDM groups corresponding to the DMRS configuration type, in other words, DMRS port expansion multiples of all the CDM groups corresponding to the DMRS configuration type are the same.

For another example, the indication information includes the second information, and the terminal device 440 determines to expand DMRS ports in a part of the CDM groups corresponding to the DMRS configuration type, in other words, to expand DMRS ports in the part of all the CDM groups corresponding to the DMRS configuration type. Specifically, the terminal device 440 may determine different non-uniform expansion manners based on the second information. For example, the terminal device 440 expands DMRS ports in one of the two CDM groups corresponding to the type 1, and does not expand DMRS ports in the other CDM group; expands DMRS ports in two of the three CDM groups corresponding to the type 2, and does not expand DMRS ports in the other CDM group; or expands DMRS ports in one of the three CDM groups corresponding to the type 2, and does not expand DMRS ports in the other two CDM groups.

Step 540: The network device 420 receives, via the DMRS ports obtained through expansion in the at least one CDM group, the DMRSs sent by the terminal device 440.

Because the time-frequency resources used by the terminal device 440 to send the DMRSs and the uplink data are configured by the network device 420, the network device 420 receives the DMRSs and the uplink data on the time-frequency resources configured for the terminal device 440, and receives the DMRSs via the DMRS ports obtained through expansion in the at least one CDM group. For example, DMRS ports obtained through expansion in a CDM group include a DMRS port 0 to a DMRS port 3. The terminal device 440 sends DMRSs via the DMRS port 0 to the DMRS port 3.

The network device 420 receives the DMRSs via the DMRS port 0 to the DMRS port 3, estimates an uplink equivalent channel and demodulates the uplink data by using the DMRSs. For estimation of the uplink equivalent channel and demodulation of the uplink data, refer to a related technology such as a specification in 3GPP TS 38.211 V16.7.0. Details are not described.

After the DMRS ports of the CDM group are expanded, the terminal device and the network device may transmit more layers of data. Therefore, a data sending rate of a single terminal device can be increased, and a quantity of terminal devices that perform uplink data transmission with the network device in a system can be increased, thereby effectively increasing a system capacity.

Optionally, in the foregoing embodiment, an example in which the terminal device 440 sends the uplink data to the network device 430 is used to describe a demodulation reference signal sending and receiving process. When sending downlink data to the terminal device 440, the network device 430 may also determine an expansion manner of DMRS ports based on a delay spread of a downlink channel (for example, a PDSCH), and send indication information to the terminal device 440, to indicate an expansion manner of expanding DMRS ports in a CDM group. The network device 420 sends DMRSs via DMRS ports obtained through expansion in a CDM group, so that the terminal device 440 receives the DMRSs via the DMRS ports obtained through expansion in the CDM group. For determining the expansion manner of DMRS ports based on the delay spread of the downlink channel (for example, the PDSCH), refer to the descriptions of determining the expansion manner of DMRS ports based on the delay spread of the uplink channel (for example, the PUSCH) in step 510.

It should be noted that the uplink data/downlink data may be uplink or downlink service data, or may be uplink or downlink signaling data. This is not limited in this embodiment of this application.

The following uses an example in which a mapping type of a DMRS is the mapping type A to describe an expansion manner of DMRS ports in a CDM group. It is assumed that the two CDM groups corresponding to the type 1 include a CDM group 0 and a CDM group 1. It is assumed that the three CDM groups corresponding to the type 2 include a CDM group 0, a CDM group 1, and a CDM group 2.

1. Configuration type 1 (type 1) DMRS port expansion

Manner 1: If a delay spread of a channel of a to-be-scheduled terminal device is less than the first threshold, the DMRS ports in each of the two CDM groups corresponding to the type 1 are expanded by two times.

For example, FIG. 6 shows a type 1 expansion manner of DMRS ports according to an embodiment of this application.

As shown in (a) in FIG. 6, a DMRS occupies a single symbol. After DMRS ports are expanded in both the CDM group 0 and the CDM group 1, two DMRS ports to which the CDM group 0 is mapped are expanded to four DMRS ports, for example, a DMRS port 0, a DMRS port 1, a DMRS port 2, and a DMRS port 3. Two DMRS ports to which the CDM group 1 is mapped are expanded to four DMRS ports, for example, a DMRS port 4, a DMRS port 5, a DMRS port 6, and a DMRS port 7.

As shown in (b) in FIG. 6, a DMRS occupies double symbols. After DMRS ports are expanded in both the CDM group 0 and the CDM group 1, four DMRS ports to which the CDM group 0 is mapped are expanded to eight DMRS ports, for example, a DMRS port 0 to a DMRS port 7. Four DMRS ports to which the CDM group 1 is mapped are expanded to eight DMRS ports, for example, a DMRS port 8 to a DMRS port 15.

Manner 2: If a delay spread of a channel of a part of to-be-scheduled terminal devices is greater than or equal to the first threshold, in the two CDM groups that correspond to the type 1, DMRS ports in one CDM group are expanded by three times, and DMRS ports in the other CDM group are not expanded.

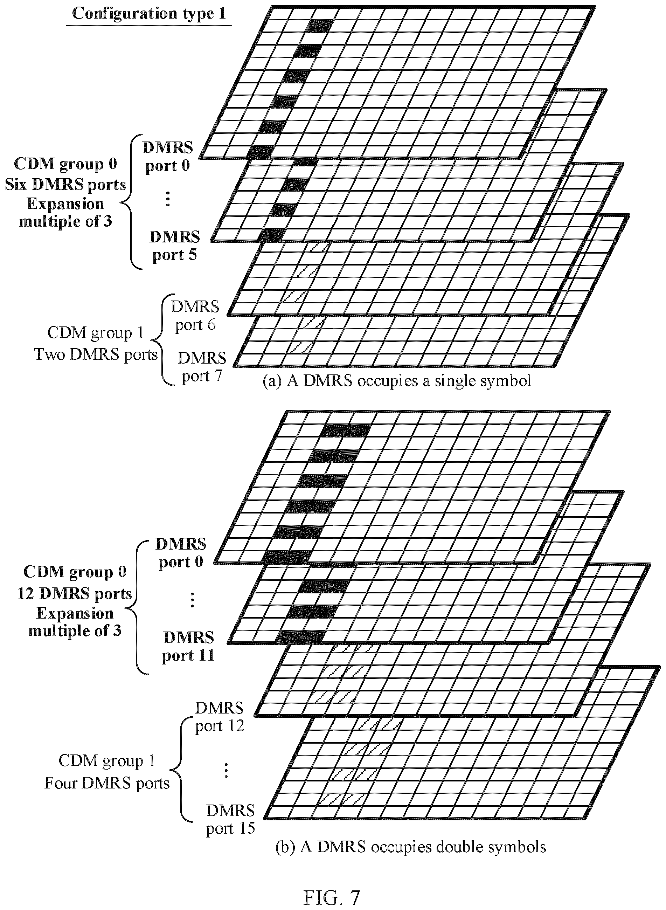

For example, FIG. 7 shows a type 1 expansion manner of DMRS ports according to an embodiment of this application.

As shown in (a) in FIG. 7, a DMRS occupies a single symbol. After DMRS ports in the CDM group 0 are expanded by three times, two DMRS ports to which the CDM group 0 is mapped are expanded to six DMRS ports, for example, a DMRS port 0 to a DMRS port 5. DMRS ports in the CDM group 1 are not expanded, and the CDM group 1 is mapped to two DMRS ports, for example, a DMRS port 6 and a DMRS port 7.

As shown in (b) in FIG. 7, a DMRS occupies double symbols. After DMRS ports in the CDM group 0 are expanded by three times, four DMRS ports to which the CDM group 0 is mapped are expanded to 12 DMRS ports, for example, a DMRS port 0 to a DMRS port 11. DMRS ports in the CDM group 1 are not expanded, and the CDM group 1 is mapped to four DMRS ports, for example, a DMRS port 12 to a DMRS port 15.

2. Configuration type 2 (type 2) DMRS port expansion

Manner 1: If a delay spread of a channel of a to-be-scheduled terminal device is less than the first threshold, DMRS ports in each of the three CDM groups corresponding to the type 2 are expanded by two times.

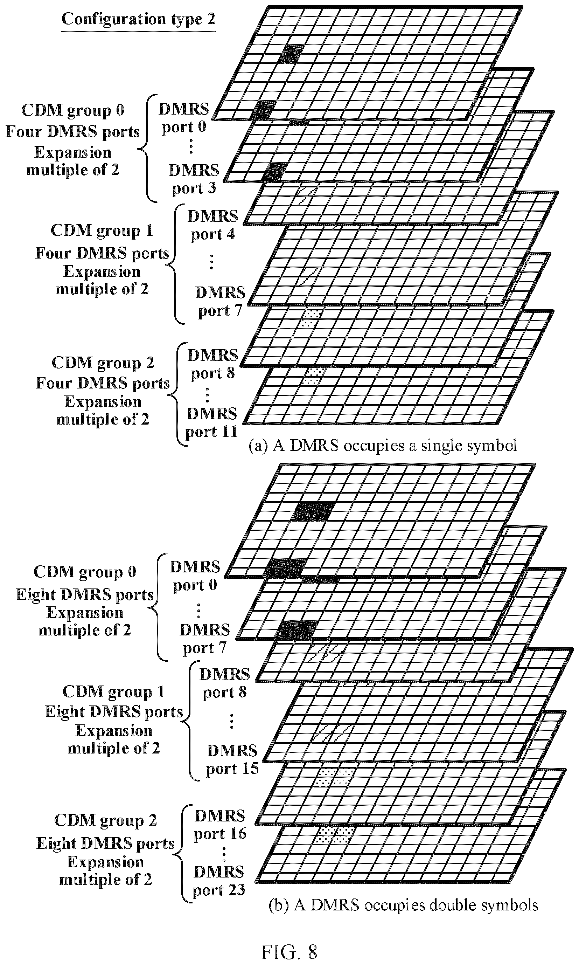

For example, FIG. 8 shows a type 2 expansion manner of DMRS ports according to an embodiment of this application.

As shown in (a) in FIG. 8, a DMRS occupies a single symbol. After DMRS ports are expanded in the CDM group 0, the CDM group 1, and the CDM group 2, two DMRS ports to which the CDM group 0 is mapped are expanded to four DMRS ports, for example, a DMRS port 0 to a DMRS port 3. Two DMRS ports to which the CDM group 1 is mapped are expanded to four DMRS ports, for example, a DMRS port 4 to a DMRS port 7. Two DMRS ports to which the CDM group 2 is mapped are expanded to four DMRS ports, for example, a DMRS port 8 to a DMRS port 11.

As shown in (b) in FIG. 8, a DMRS occupies double symbols. After DMRS ports are expanded in all the CDM group 0, the CDM group 1, and the CDM group 2, four DMRS ports to which the CDM group 0 is mapped are expanded to eight DMRS ports, for example, a DMRS port 0 to a DMRS port 7. Four DMRS ports to which the CDM group 1 is mapped are expanded to eight DMRS ports, for example, a DMRS port 8 to a DMRS port 15. Four DMRS ports to which the CDM group 2 is mapped are expanded to eight DMRS ports, for example, a DMRS port 16 to a DMRS port 23.

Manner 2: If a delay spread of a channel of a first part of to-be-scheduled terminal devices is greater than or equal to the first threshold and less than the second threshold, and a delay spread of a channel of a second part of the terminal devices is greater than or equal to the second threshold, in the three CDM groups corresponding to the type 2, DMRS ports in one CDM group are expanded by three times, DMRS ports in another CDM group are expanded by two times, and DMRS ports in the other CDM group are not expanded.

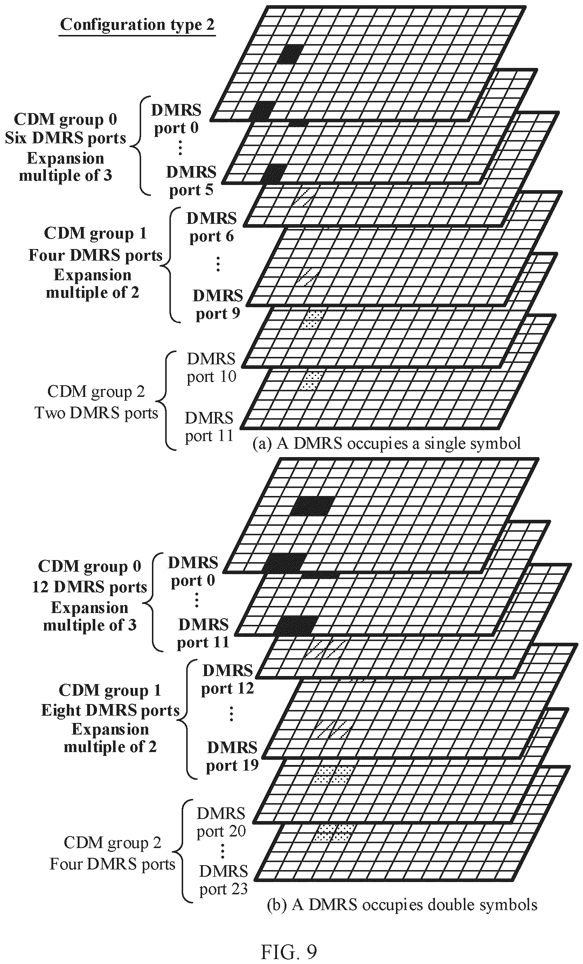

For example, FIG. 9 shows a type 2 expansion manner of DMRS ports according to an embodiment of this application.

As shown in (a) in FIG. 9, a DMRS occupies a single symbol. After DMRS ports in the CDM group 0 are expanded by three times, two DMRS ports to which the CDM group 0 is mapped are expanded to six DMRS ports, for example, a DMRS port 0 to a DMRS port 5. After DMRS ports in the CDM group 1 are expanded by two times, two DMRS ports to which the CDM group 1 is mapped are expanded to four DMRS ports, for example, a DMRS port 6 to a DMRS port 9. DMRS ports in the CDM group 2 are not expanded, and the CDM group 2 is mapped to two DMRS ports, for example, a DMRS port 10 and a DMRS port 11.

As shown in (b) in FIG. 9, a DMRS occupies double symbols. After DMRS ports in the CDM group 0 are expanded by three times, four DMRS ports to which the CDM group 0 is mapped are expanded to 12 DMRS ports, for example, a DMRS port 0 to a DMRS port 11. After DMRS ports in the CDM group 1 are expanded by two times, four DMRS ports to which the CDM group 1 is mapped are expanded to eight DMRS ports, for example, a DMRS port 12 to a DMRS port 19. DMRS ports in the CDM group 2 are not expanded, and the CDM group 2 is mapped to four DMRS ports, for example, a DMRS port 20 to a DMRS port 23.

Manner 3: If a delay spread of a channel of a first part of to-be-scheduled terminal devices is greater than or equal to the second threshold, and delay spreads of channels of all other terminal devices are less than the first threshold, in the three CDM groups corresponding to the type 2, DMRS ports in one CDM group are expanded by four times, and DMRS ports in the other two CDM groups are not expanded.

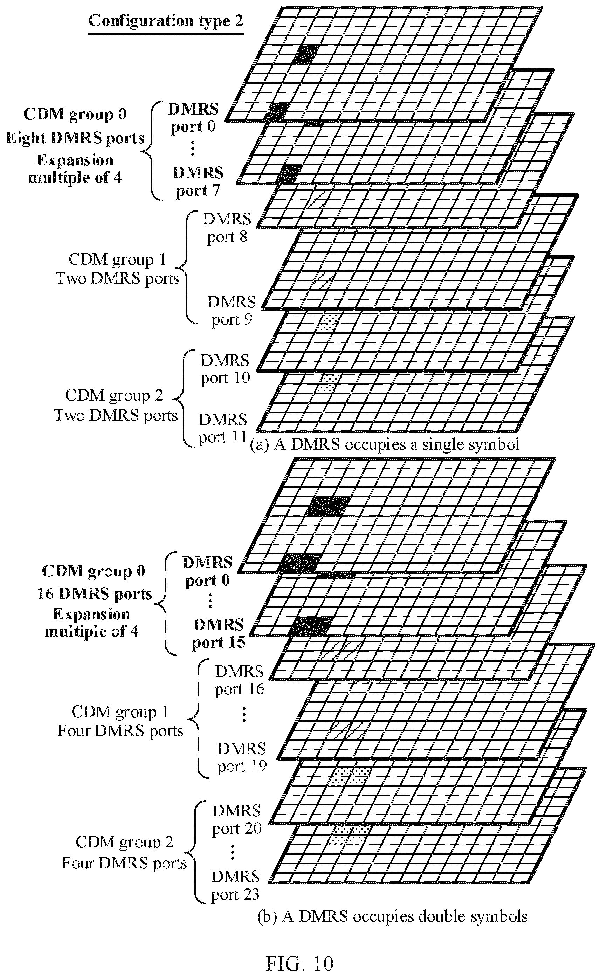

For example, FIG. 10 shows a type 2 expansion manner of DMRS ports according to an embodiment of this application.

As shown in (a) in FIG. 10, a DMRS occupies a single symbol. After DMRS ports in the CDM group 0 are expanded by four times, two DMRS ports to which the CDM group 0 is mapped are expanded to eight DMRS ports, for example, a DMRS port 0 to a DMRS port 7. DMRS ports in the CDM group 1 are not expanded, and the CDM group 1 is mapped to two DMRS ports, for example, a DMRS port 8 and a DMRS port 9. DMRS ports in the CDM group 2 are not expanded, and the CDM group 2 is mapped to two DMRS ports, for example, a DMRS port 10 and a DMRS port 11.

As shown in (b) in FIG. 10, a DMRS occupies double symbols. After DMRS ports in the CDM group 0 are expanded by four times, four DMRS ports to which the CDM group 0 is mapped are expanded to 16 DMRS ports, for example, a DMRS port 0 to a DMRS port 15. DMRS ports in the CDM group 1 are not expanded, and the CDM group 1 is mapped to four DMRS ports, for example, a DMRS port 16 to a DMRS port 19. DMRS ports in the CDM group 2 are not expanded, and the CDM group 2 is mapped to four DMRS ports, for example, a DMRS port 20 to a DMRS port 23.

The foregoing embodiment describes determining of the expansion manner of DMRS ports in the at least one of the CDM groups based on the channel information of the terminal device. DMRS sequences are generated before the network device or the terminal device determines the time-frequency resource positions and the DMRS ports in the DMRSs and sends the DMRSs, in other words, the DMRS signals are sent by occupying an RE corresponding to a CDM group.

An embodiment of this application further provides a DMRS sequence generation method. The DMRS sequence generation method is used to generate DMRSs sent via DMRS ports obtained through expansion in a CDM group. DMRSs transmitted via DMRS ports in a CDM group that is not expanded may be generated by using a conventional method (for example, specified in 3GPP TS 38.211 V16.7.0). For example, an uplink DMRS sequence transmitted (for example, sent or received) via the DMRS ports obtained through expansion in the CDM group is generated by using a formula (1).

$$a_{k,l}^{(p_j,\mu)} = w_{\mathrm{f}}\left(k'\right)w_{\mathrm{t}}\left(l'\right)r\left(2n+k'\right)e^{j2k\pi m/M}$$

$$k = \begin{cases} 4n+2k'+\Delta & \text{Configuration type 1} \\ 6n+k'+\Delta & \text{Configuration type 2} \end{cases}$$

$$k' = 0,1$$

$$\hat{k} = \begin{cases} \lfloor k/2 \rfloor & \text{Configuration type 1} \\ n & \text{Configuration type 2} \end{cases} \qquad \text{Formula (1)}$$

$$l = \bar{l} + l'$$

$$n = 0,1,\ldots$$

$$j = 0,1,\ldots,\upsilon-1$$

Parameters $w_{\mathrm{f}}(k')$ and $w_{\mathrm{t}}(l')$ in the formula (1) may be obtained by querying Tables 6.4.1.1.3-1 and 6.4.1.1.3-2 specified in 3GPP TS 38.211 V16.7.0.

For example, a downlink DMRS sequence transmitted (for example, sent or received) via the DMRS ports obtained through expansion in the CDM group is generated by using a formula (2).

$$a_{k,l}^{(p,\mu)} = \beta_{\mathrm{PDSCH}}^{\mathrm{DMRS}} w_{\mathrm{f}}\left(k'\right)w_{\mathrm{t}}\left(l'\right)r\left(2n+k'\right)e^{j2k\pi m/M}$$

$$k = \begin{cases} 4n+2k'+\Delta & \text{Configuration type 1} \\ 6n+k'+\Delta & \text{Configuration type 2} \end{cases}$$

$$k' = 0,1$$

$$\hat{k} = \begin{cases} \lfloor k/2 \rfloor & \text{Configuration type 1} \\ n & \text{Configuration type 2} \end{cases} \qquad \text{Formula (2)}$$

$$l = \bar{l} + l'$$

$$n = 0,1,\ldots$$

Parameters $w_{\mathrm{f}}(k')$ and $w_{\mathrm{t}}(l')$ in the formula (2) may be obtained by querying Tables 7.4.1.1.2-1 and 7.4.1.1.2-2 specified in 3GPP TS 38.211 V16.7.0.

Compared with a conventional uplink DMRS sequence generation formula $(p_j,\mu)$ $a_{k,l} = w_{\mathrm{f}}(k')w_{\mathrm{t}}(l')r(2n+k')$ in an NR system, in this formula, calculation manners of $e^{j2\hat{k}\pi m/M}$ and $\hat{k}$ in a type 1 and a type 2 are added. M indicates an expansion manner of DMRS ports in at least one of CDM groups. m indicates a delay domain offset of the DMRS port. A network device determines a value of M based on delay spreads of channels of all currently scheduled terminal devices, where the value of M may indicate first information or second information. A value of m is related to a DMRS port index, and different DMRS port indexes correspond to different values of m.

The network device and a terminal device may preconfigure meanings of values of M, m, and m/M. After obtaining the value of M, m, or m/M, the terminal device may determine the expansion manner of DMRS ports in the CDM group according to a configured rule.

In a first possible implementation, the network device separately indicates the value of M and the value of m to the terminal device.

1. Configuration type 1 (type 1) DMRS port expansion

If M=4, it indicates that DMRS ports in two CDM groups corresponding to the type 1 are expanded by two times.

If M=6, it indicates that in two CDM groups corresponding to the type 1, DMRS ports in one CDM group are expanded by three times, and DMRS ports in the other CDM group are not expanded.

The value of M may be indicated to the terminal device in a broadcast manner, or may be indicated to each terminal device by using RRC signaling. For example, the value of M is directly indicated, or a parameter is designed to indicate whether non-uniform expansion is enabled. If the non-uniform expansion is enabled, it indicates that M=6. If the non-uniform expansion is not enabled, it indicates that M=4. The value of M may alternatively be indicated to each terminal device by using one bit in DCI. For example, if a value of the bit is 0, it indicates that M=4. If a value of the bit is 1, it indicates that M=6.

In some embodiments, the value of m is related to the value of M and the DMRS port index. To reduce indication overheads, the value of m is bound to the DMRS port index for joint indication.

For example, as shown in Table 1, M=4, and the value of m is added to a DMRS parameter table of the type 1. In Table 1, an index 0 to an index 7 are legacy DMRS ports, and all values of m are 0; and an index 8 to an index 15 are newly added expanded DMRS ports, and all values of m are 1. DMRS ports in each of a CDM group 0 and a CDM group 1 are expanded by two times.

**Table 1**

| Index $\bar{p}$ | CDM group $\lambda$ | $\Delta$ | $w_f(k')$ | | $w_t(l')$ | | |
| | | | $k' = 0$ | $k' = 1$ | $l' = 0$ | $l' = 1$ | $m$ |
|---|---|---|---|---|---|---|---|
| 0 | 0 | 0 | +1 | +1 | +1 | +1 | 0 |
| 1 | 0 | 0 | +1 | -1 | +1 | +1 | 0 |
| 2 | 1 | 1 | +1 | +1 | +1 | +1 | 0 |
| 3 | 1 | 1 | +1 | -1 | +1 | +1 | 0 |
| 4 | 0 | 0 | +1 | +1 | +1 | -1 | 0 |
| 5 | 0 | 0 | +1 | -1 | +1 | -1 | 0 |
| 6 | 1 | 1 | +1 | +1 | +1 | -1 | 0 |
| 7 | 1 | 1 | +1 | -1 | +1 | -1 | 0 |
| 8 | 0 | 0 | +1 | +1 | +1 | +1 | 1 |
| 9 | 0 | 0 | +1 | -1 | +1 | +1 | 1 |
| 10 | 1 | 1 | +1 | +1 | +1 | +1 | 1 |
| 11 | 1 | 1 | +1 | -1 | +1 | +1 | 1 |
| 12 | 0 | 0 | +1 | +1 | +1 | -1 | 1 |
| 13 | 0 | 0 | +1 | -1 | +1 | -1 | 1 |
| 14 | 1 | 1 | +1 | +1 | +1 | -1 | 1 |
| 15 | 1 | 1 | +1 | -1 | +1 | -1 | 1 |

For another example, as shown in Table 2, M=6, and the value of m is added to a DMRS parameter table of the type 1. In Table 2, an index 0 to an index 7 are legacy DMRS ports, and all values of m are 0; and an index 8 to an index 15 are newly added expanded DMRS ports, all values of m corresponding to the DMRS ports with indexes 8, 9, 12, and 13 are 1, and all values of m corresponding to the DMRS ports with indexes 10, 11, 14, and 15 are 2. DMRS ports in a CDM group 0 are expanded by three times, and DMRS ports in a CDM group 1 are not expanded.

**Table 2**

| Index $\bar{p}$ | CDM group $\lambda$ | $\Delta$ | $w_f(k')$ | | $w_t(l')$ | | |
| | | | $k' = 0$ | $k' = 1$ | $l' = 0$ | $l' = 1$ | $m$ |
|---|---|---|---|---|---|---|---|
| 0 | 0 | 0 | +1 | +1 | +1 | +1 | 0 |
| 1 | 0 | 0 | +1 | -1 | +1 | +1 | 0 |
| 2 | 1 | 1 | +1 | +1 | +1 | +1 | 0 |
| 3 | 1 | 1 | +1 | -1 | +1 | +1 | 0 |
| 4 | 0 | 0 | +1 | +1 | +1 | -1 | 0 |
| 5 | 0 | 0 | +1 | -1 | +1 | -1 | 0 |
| 6 | 1 | 1 | +1 | +1 | +1 | -1 | 0 |
| 7 | 1 | 1 | +1 | -1 | +1 | -1 | 0 |
| 8 | 0 | 0 | +1 | +1 | +1 | +1 | 1 |
| 9 | 0 | 0 | +1 | -1 | +1 | +1 | 1 |

(continued)

| Index $\bar{p}$ | CDM group $\lambda$ | Δ | $w_f(k')$ | | $w_t(l')$ | | |
|---|---|---|---|---|---|---|---|
| | | | $k' = 0$ | $k' = 1$ | $l' = 0$ | $l' = 1$ | $m$ |
| 10 | 0 | 0 | +1 | +1 | +1 | +1 | 2 |
| 11 | 0 | 0 | +1 | -1 | +1 | +1 | 2 |
| 12 | 0 | 0 | +1 | +1 | +1 | -1 | 1 |
| 13 | 0 | 0 | +1 | -1 | +1 | -1 | 1 |
| 14 | 0 | 0 | +1 | +1 | +1 | -1 | 2 |
| 15 | 0 | 0 | +1 | -1 | +1 | -1 | 2 |

It should be noted that, in Table 2, which DMRS ports in the newly added DMRS port 8 to the newly added DMRS port 15 have m values being 1 or 2 are not limited.

2. Configuration type 2 (type 2) DMRS port expansion

If M=2, it indicates that DMRS ports in each of three CDM groups corresponding to the type 2 are expanded by two times.

If M=3, it indicates that in three CDM groups corresponding to the type 2, DMRS ports in one CDM group are expanded by three times, DMRS ports in another CDM group are expanded by two times, and DMRS ports in the other CDM group are not expanded.

If M=4, it indicates that in three CDM groups corresponding to the type 2, DMRS ports in one CDM group are expanded by four times, and DMRS ports in the other two CDM groups are not expanded.

The value of M may be indicated to the terminal device in a broadcast manner, or may be indicated to each terminal device by using RRC signaling. For example, the value of M is directly indicated, or a status parameter is designed to indicate three expansion manners. The value of M may alternatively be indicated to each terminal device by using two bits in DCI. For example, if values of two bits are 00, it indicates that M=2. If values of two bits are 01, it indicates that M=3. If values of two bits are 10, it indicates that M=4.

In some embodiments, the value of m is related to the value of M and the DMRS port index. To reduce indication overheads, the value of m is bound to the DMRS port index for joint indication.

For example, as shown in Table 3, M=2, and the value of m is added to a DMRS parameter table of the type 2. In Table 3, an index 0 to an index 11 are legacy DMRS ports, and all values of m are 0; and an index 12 to an index 23 are newly added expanded DMRS ports, and all values of m are 1. DMRS ports in each of a CDM group 0, a CDM group 1, and a CDM group 2 are expanded by two times.

**Table 3**

| Index $\bar{p}$ | CDM group $\lambda$ | Δ | $w_f(k')$ | | $w_t(l')$ | | |
|---|---|---|---|---|---|---|---|
| | | | $k' = 0$ | $k' = 1$ | $l' = 0$ | $l' = 1$ | $m$ |
| 0 | 0 | 0 | +1 | +1 | +1 | +1 | 0 |
| 1 | 0 | 0 | +1 | -1 | +1 | +1 | 0 |
| 2 | 1 | 2 | +1 | +1 | +1 | +1 | 0 |
| 3 | 1 | 2 | +1 | -1 | +1 | +1 | 0 |
| 4 | 2 | 4 | +1 | +1 | +1 | +1 | 0 |
| 5 | 2 | 4 | +1 | -1 | +1 | +1 | 0 |
| 6 | 0 | 0 | +1 | +1 | +1 | -1 | 0 |
| 7 | 0 | 0 | +1 | -1 | +1 | -1 | 0 |
| 8 | 1 | 2 | +1 | +1 | +1 | -1 | 0 |
| 9 | 1 | 2 | +1 | -1 | +1 | -1 | 0 |
| 10 | 2 | 4 | +1 | +1 | +1 | -1 | 0 |
| 11 | 2 | 4 | +1 | -1 | +1 | -1 | 0 |

(continued)

| Index $\tilde{p}$ | CDM group $\lambda$ | $\Delta$ | $w_f(k')$ | | $w_t(l')$ | | |
|---|---|---|---|---|---|---|---|
| | | | $k' = 0$ | $k' = 1$ | $l' = 0$ | $l' = 1$ | $m$ |
| 12 | 0 | 0 | +1 | +1 | +1 | +1 | 1 |
| 13 | 0 | 0 | +1 | -1 | +1 | +1 | 1 |
| 14 | 1 | 2 | +1 | +1 | +1 | +1 | 1 |
| 15 | 1 | 2 | +1 | -1 | +1 | +1 | 1 |
| 16 | 2 | 4 | +1 | +1 | +1 | +1 | 1 |
| 17 | 2 | 4 | +1 | -1 | +1 | +1 | 1 |
| 18 | 0 | 0 | +1 | +1 | +1 | -1 | 1 |
| 19 | 0 | 0 | +1 | -1 | +1 | -1 | 1 |
| 20 | 1 | 2 | +1 | +1 | +1 | -1 | 1 |
| 21 | 1 | 2 | +1 | -1 | +1 | -1 | 1 |
| 22 | 2 | 4 | +1 | +1 | +1 | -1 | 1 |
| 23 | 2 | 4 | +1 | -1 | +1 | -1 | 1 |

For another example, as shown in Table 4, M=3, and the value of m is added to a DMRS parameter table of the type 2. In Table 4, an index 0 to an index 11 are legacy DMRS ports, and all values of m are 0; and an index 12 to an index 23 are newly added expanded DMRS ports, and the value of m is 1, 1.5, or 2. DMRS ports in a CDM group 0 are expanded by three times, DMRS ports in a CDM group 0 are expanded by two times, and DMRS ports in a CDM group 2 are not expanded.

**Table 4**

| Index $\tilde{p}$ | CDM group $\lambda$ | $\Delta$ | $w_f(k')$ | | $w_t(l')$ | | |
|---|---|---|---|---|---|---|---|
| | | | $k' = 0$ | $k' = 1$ | $l' = 0$ | $l' = 1$ | $m$ |
| 0 | 0 | 0 | +1 | +1 | +1 | +1 | 0 |
| 1 | 0 | 0 | +1 | -1 | +1 | +1 | 0 |
| 2 | 1 | 2 | +1 | +1 | +1 | +1 | 0 |
| 3 | 1 | 2 | +1 | -1 | +1 | +1 | 0 |
| 4 | 2 | 4 | +1 | +1 | +1 | +1 | 0 |
| 5 | 2 | 4 | +1 | -1 | +1 | +1 | 0 |
| 6 | 0 | 0 | +1 | +1 | +1 | -1 | 0 |
| 7 | 0 | 0 | +1 | -1 | +1 | -1 | 0 |
| 8 | 1 | 2 | +1 | +1 | +1 | -1 | 0 |
| 9 | 1 | 2 | +1 | -1 | +1 | -1 | 0 |
| 10 | 2 | 4 | +1 | +1 | +1 | -1 | 0 |
| 11 | 2 | 4 | +1 | -1 | +1 | -1 | 0 |
| 12 | 0 | 0 | +1 | +1 | +1 | +1 | 1 |
| 13 | 0 | 0 | +1 | -1 | +1 | +1 | 1 |
| 14 | 1 | 2 | +1 | +1 | +1 | +1 | 1.5 |
| 15 | 1 | 2 | +1 | -1 | +1 | +1 | 1.5 |
| 16 | 0 | 0 | +1 | +1 | +1 | +1 | 2 |
| 17 | 0 | 0 | +1 | -1 | +1 | +1 | 2 |
| 18 | 0 | 0 | +1 | +1 | +1 | -1 | 1 |

(continued)

| Index $\tilde{p}$ | CDM group $\lambda$ | $\Delta$ | $w_f(k')$ | | $w_t(l')$ | | |
|---|---|---|---|---|---|---|---|
| | | | $k' = 0$ | $k' = 1$ | $l' = 0$ | $l' = 1$ | $m$ |
| 19 | 0 | 0 | +1 | -1 | +1 | -1 | 1 |
| 20 | 1 | 2 | +1 | +1 | +1 | -1 | 1.5 |
| 21 | 1 | 2 | +1 | -1 | +1 | -1 | 1.5 |
| 22 | 0 | 0 | +1 | +1 | +1 | -1 | 2 |
| 23 | 0 | 0 | +1 | -1 | +1 | -1 | 2 |

It should be noted that, in Table 4, which DMRS ports in the newly added DMRS port 12 to the newly added DMRS port 23 have m values being 1, 1.5, or 2 are not limited.

For another example, as shown in Table 5, M=4, and the value of m is added to a DMRS parameter table of the type 2. In Table 5, an index 0 to an index 11 are legacy DMRS ports, and all values of m are 0; and an index 12 to an index 23 are newly added expanded DMRS ports, and the value of m is 1, 2, or 3. DMRS ports in a CDM group 0 are expanded by four times, and neither DMRS ports in a CDM group 1 nor DMRS ports in a CDM group 2 are expanded.

**Table 5**

| Index $\tilde{p}$ | CDM group $\lambda$ | $\Delta$ | $w_f(k')$ | | $w_t(l')$ | | |
|---|---|---|---|---|---|---|---|
| | | | $k' = 0$ | $k' = 1$ | $l' = 0$ | $l' = 1$ | $m$ |
| 0 | 0 | 0 | +1 | +1 | +1 | +1 | 0 |
| 1 | 0 | 0 | +1 | -1 | +1 | +1 | 0 |
| 2 | 1 | 2 | +1 | +1 | +1 | +1 | 0 |
| 3 | 1 | 2 | +1 | -1 | +1 | +1 | 0 |
| 4 | 2 | 4 | +1 | +1 | +1 | +1 | 0 |
| 5 | 2 | 4 | +1 | -1 | +1 | +1 | 0 |
| 6 | 0 | 0 | +1 | +1 | +1 | -1 | 0 |
| 7 | 0 | 0 | +1 | -1 | +1 | -1 | 0 |
| 8 | 1 | 2 | +1 | +1 | +1 | -1 | 0 |
| 9 | 1 | 2 | +1 | -1 | +1 | -1 | 0 |
| 10 | 2 | 4 | +1 | +1 | +1 | -1 | 0 |
| 11 | 2 | 4 | +1 | -1 | +1 | -1 | 0 |
| 12 | 0 | 0 | +1 | +1 | +1 | +1 | 1 |
| 13 | 0 | 0 | +1 | -1 | +1 | +1 | 1 |
| 14 | 0 | 0 | +1 | +1 | +1 | +1 | 3 |
| 15 | 0 | 0 | +1 | -1 | +1 | +1 | 3 |
| 16 | 0 | 0 | +1 | +1 | +1 | +1 | 2 |
| 17 | 0 | 0 | +1 | -1 | +1 | +1 | 2 |
| 18 | 0 | 0 | +1 | +1 | +1 | -1 | 1 |
| 19 | 0 | 0 | +1 | -1 | +1 | -1 | 1 |
| 20 | 0 | 0 | +1 | +1 | +1 | -1 | 3 |
| 21 | 0 | 0 | +1 | -1 | +1 | -1 | 3 |
| 22 | 0 | 0 | +1 | +1 | +1 | -1 | 2 |
| 23 | 0 | 0 | +1 | -1 | +1 | -1 | 2 |

It should be noted that, in Table 5, which DMRS ports in the newly added DMRS port 12 to the newly added DMRS port 23 have m values being 1, 2, or 3 are not limited.

In this way, the terminal device obtains M indicated by the network device, and may determine, based on the value of M, an expansion manner of DMRS ports in at least one of CDM groups corresponding to a DMRS configuration type, determine the value of m based on the DMRS port index, and substitute the value of M and the value of m into the formula (1), to generate the DMRS sequence. The expansion manner of DMRS ports in the CDM group may be determined based on the DMRS sequence generation manner, and the DMRS sequence sent based on the expanded DMRS ports may be determined.

In a second possible implementation, the network device indicates the value of m/M to the terminal device. The value of m/M is related to the value of M and the DMRS port index. To reduce indication overheads, the value of m/M is bound to the DMRS port index for joint indication.

1. Configuration type 1 (type 1) DMRS port expansion

For example, as shown in Table 6, M=4, and the value of m/M is added to a DMRS parameter table of the type 1. In Table 6, an index 0 to an index 7 are legacy DMRS ports, and all values of m/M are 0; and an index 8 to an index 15 are newly added expanded DMRS ports, and all values of m/M are 1/4. DMRS ports in each of a CDM group 0 and a CDM group 1 are expanded by two times.

**Table 6**

| Index $\bar{p}$ | CDM group $\lambda$ | $\Delta$ | $w_f(k')$ | | $w_t(l')$ | | |
| | | | $k' = 0$ | $k' = 1$ | $l' = 0$ | $l' = 1$ | $m/M$ |
|---|---|---|---|---|---|---|---|
| 0 | 0 | 0 | +1 | +1 | +1 | +1 | 0 |
| 1 | 0 | 0 | +1 | -1 | +1 | +1 | 0 |
| 2 | 1 | 1 | +1 | +1 | +1 | +1 | 0 |
| 3 | 1 | 1 | +1 | -1 | +1 | +1 | 0 |
| 4 | 0 | 0 | +1 | +1 | +1 | -1 | 0 |
| 5 | 0 | 0 | +1 | -1 | +1 | -1 | 0 |
| 6 | 1 | 1 | +1 | +1 | +1 | -1 | 0 |
| 7 | 1 | 1 | +1 | -1 | +1 | -1 | 0 |
| 8 | 0 | 0 | +1 | +1 | +1 | +1 | 1/4 |
| 9 | 0 | 0 | +1 | -1 | +1 | +1 | 1/4 |
| 10 | 1 | 1 | +1 | +1 | +1 | +1 | 1/4 |
| 11 | 1 | 1 | +1 | -1 | +1 | +1 | 1/4 |
| 12 | 0 | 0 | +1 | +1 | +1 | -1 | 1/4 |
| 13 | 0 | 0 | +1 | -1 | +1 | -1 | 1/4 |
| 14 | 1 | 1 | +1 | +1 | +1 | -1 | 1/4 |
| 15 | 1 | 1 | +1 | -1 | +1 | -1 | 1/4 |

For another example, as shown in Table 7, M=6, and the value of m/M is added to a DMRS parameter table of the type 1. In Table 7, an index 0 to an index 7 are legacy DMRS ports, and all values of m/M are 0; and an index 8 to an index 15 are newly added expanded DMRS ports, values of m/M of a half of DMRS ports in the newly added expanded DMRS ports are 1/6, to be specific, all values of m of the DMRS ports with indexes 8, 9, 12, and 13 are 1/6, and values of m/M of the other half of DMRS ports in the newly added expanded DMRS ports are 1/3, to be specific, values of m of the DMRS ports with indexes 10, 11, 14, and 15 are 1/3. DMRS ports in a CDM group 0 are expanded by three times, and DMRS ports in a CDM group 1 are not expanded.

**Table 7**

| Index $\bar{p}$ | CDM group $\lambda$ | $\Delta$ | $w_f(k')$ | | $w_t(l')$ | | *m/M* |
| | | | $k' = 0$ | $k' = 1$ | $l' = 0$ | $l' = 1$ | |
|---|---|---|---|---|---|---|---|
| 0 | 0 | 0 | +1 | +1 | +1 | +1 | 0 |
| 1 | 0 | 0 | +1 | -1 | +1 | +1 | 0 |
| 2 | 1 | 1 | +1 | +1 | +1 | +1 | 0 |
| 3 | 1 | 1 | +1 | -1 | +1 | +1 | 0 |
| 4 | 0 | 0 | +1 | +1 | +1 | -1 | 0 |
| 5 | 0 | 0 | +1 | -1 | +1 | -1 | 0 |
| 6 | 1 | 1 | +1 | +1 | +1 | -1 | 0 |
| 7 | 1 | 1 | +1 | -1 | +1 | -1 | 0 |
| 8 | 0 | 0 | +1 | +1 | +1 | +1 | 1/6 |
| 9 | 0 | 0 | +1 | -1 | +1 | +1 | 1/6 |
| 10 | 0 | 0 | +1 | +1 | +1 | +1 | 1/3 |
| 11 | 0 | 0 | +1 | -1 | +1 | +1 | 1/3 |
| 12 | 0 | 0 | +1 | +1 | +1 | -1 | 1/6 |
| 13 | 0 | 0 | +1 | -1 | +1 | -1 | 1/6 |
| 14 | 0 | 0 | +1 | +1 | +1 | -1 | 1/3 |
| 15 | 0 | 0 | +1 | -1 | +1 | -1 | 1/3 |

It should be noted that, in Table 7, which DMRS ports in the newly added DMRS port 8 to the newly added DMRS port 15 have m values being 1/6 or 1/3 are not limited.

In conclusion, if the values of m/M include 0 and 1/4, it indicates to perform uniform DMRS port expansion on the two CDM groups corresponding to the type 1. All the values of m/M of the legacy DMRS ports are 0, and all the values of m/M of the expanded DMRS ports are 1/4.

If the values of m/M include 0, 1/3, and 1/6, it indicates to perform non-uniform DMRS port expansion on the two CDM groups corresponding to the type 1. All the values of m/M of the legacy DMRS ports are 0, all values of m/M of a half of DMRS ports in the expanded DMRS ports are 1/3, and all values of m/M of the other half of DMRS ports are 1/6.

2. Configuration type 2 (type 2) DMRS port expansion

For example, as shown in Table 8, M=2, and the value of m/M is added to a DMRS parameter table of the type 2. In Table 8, an index 0 to an index 11 are legacy DMRS ports, and all values of m/M are 0; and an index 12 to an index 23 are newly added expanded DMRS ports, and all values of m/M are 1/2. DMRS ports in each of a CDM group 0, a CDM group 1, and a CDM group 2 are expanded by two times.

**Table 8**

| Index $\bar{p}$ | CDM group $\lambda$ | $\Delta$ | $w_f(k')$ | | $w_t(l')$ | | *m/M* |
| | | | $k' = 0$ | $k' = 1$ | $l' = 0$ | $l' = 1$ | |
|---|---|---|---|---|---|---|---|
| 0 | 0 | 0 | +1 | +1 | +1 | +1 | 0 |
| 1 | 0 | 0 | +1 | -1 | +1 | +1 | 0 |
| 2 | 1 | 2 | +1 | +1 | +1 | +1 | 0 |
| 3 | 1 | 2 | +1 | -1 | +1 | +1 | 0 |
| 4 | 2 | 4 | +1 | +1 | +1 | +1 | 0 |
| 5 | 2 | 4 | +1 | -1 | +1 | +1 | 0 |
| 6 | 0 | 0 | +1 | +1 | +1 | -1 | 0 |

(continued)

| Index $\bar{p}$ | CDM group $\lambda$ | $\Delta$ | $w_f(k')$ | | $w_t(l')$ | | $m/M$ |
|---|---|---|---|---|---|---|---|
| | | | $k' = 0$ | $k' = 1$ | $l' = 0$ | $l' = 1$ | |
| 7 | 0 | 0 | +1 | -1 | +1 | -1 | 0 |
| 8 | 1 | 2 | +1 | +1 | +1 | -1 | 0 |
| 9 | 1 | 2 | +1 | -1 | +1 | -1 | 0 |
| 10 | 2 | 4 | +1 | +1 | +1 | -1 | 0 |
| 11 | 2 | 4 | +1 | -1 | +1 | -1 | 0 |
| 12 | 0 | 0 | +1 | +1 | +1 | +1 | 1/2 |
| 13 | 0 | 0 | +1 | -1 | +1 | +1 | 1/2 |
| 14 | 1 | 2 | +1 | +1 | +1 | +1 | 1/2 |
| 15 | 1 | 2 | +1 | -1 | +1 | +1 | 1/2 |
| 16 | 2 | 4 | +1 | +1 | +1 | +1 | 1/2 |
| 17 | 2 | 4 | +1 | -1 | +1 | +1 | 1/2 |
| 18 | 0 | 0 | +1 | +1 | +1 | -1 | 1/2 |
| 19 | 0 | 0 | +1 | -1 | +1 | -1 | 1/2 |
| 20 | 1 | 2 | +1 | +1 | +1 | -1 | 1/2 |
| 21 | 1 | 2 | +1 | -1 | +1 | -1 | 1/2 |
| 22 | 2 | 4 | +1 | +1 | +1 | -1 | 1/2 |
| 23 | 2 | 4 | +1 | -1 | +1 | -1 | 1/2 |

For another example, as shown in Table 9, M=3, and the value of m/M is added to a DMRS parameter table of the type 2. In Table 9, an index 0 to an index 11 are legacy DMRS ports, and all values of m/M are 0; and an index 12 to an index 23 are newly added expanded DMRS ports, all values of m/M corresponding to the DMRS ports with indexes 14, 15, 20, and 21 are 1/2, all values of m/M corresponding to the DMRS ports with indexes 12, 13, 18, and 19 are 1/3, and all values of m/M corresponding to the DMRS ports with indexes 16, 17, 22, and 23 are 2/3. DMRS ports in a CDM group 0 are expanded by three times, DMRS ports in a CDM group 1 are expanded by two times, and DMRS ports in a CDM group 2 are not expanded.

**Table 9**

| Index $\bar{p}$ | CDM group $\lambda$ | $\Delta$ | $w_f(k')$ | | $w_t(l')$ | | $m/M$ |
|---|---|---|---|---|---|---|---|
| | | | $k' = 0$ | $k' = 1$ | $l' = 0$ | $l' = 1$ | |
| 0 | 0 | 0 | +1 | +1 | +1 | +1 | 0 |
| 1 | 0 | 0 | +1 | -1 | +1 | +1 | 0 |
| 2 | 1 | 2 | +1 | +1 | +1 | +1 | 0 |
| 3 | 1 | 2 | +1 | -1 | +1 | +1 | 0 |
| 4 | 2 | 4 | +1 | +1 | +1 | +1 | 0 |
| 5 | 2 | 4 | +1 | -1 | +1 | +1 | 0 |
| 6 | 0 | 0 | +1 | +1 | +1 | -1 | 0 |
| 7 | 0 | 0 | +1 | -1 | +1 | -1 | 0 |
| 8 | 1 | 2 | +1 | +1 | +1 | -1 | 0 |
| 9 | 1 | 2 | +1 | -1 | +1 | -1 | 0 |
| 10 | 2 | 4 | +1 | +1 | +1 | -1 | 0 |
| 11 | 2 | 4 | +1 | -1 | +1 | -1 | 0 |

(continued)

| Index $\bar{p}$ | CDM group $\lambda$ | $\Delta$ | $w_f(k')$ | | $w_t(l')$ | | *m/M* |
|---|---|---|---|---|---|---|---|
| | | | $k' = 0$ | $k' = 1$ | $l' = 0$ | $l' = 1$ | |
| 12 | 0 | 0 | +1 | +1 | +1 | +1 | 1/3 |
| 13 | 0 | 0 | +1 | -1 | +1 | +1 | 1/3 |
| 14 | 1 | 2 | +1 | +1 | +1 | +1 | 1/2 |
| 15 | 1 | 2 | +1 | -1 | +1 | +1 | 1/2 |
| 16 | 0 | 0 | +1 | +1 | +1 | +1 | 2/3 |
| 17 | 0 | 0 | +1 | -1 | +1 | +1 | 2/3 |
| 18 | 0 | 0 | +1 | +1 | +1 | -1 | 1/3 |
| 19 | 0 | 0 | +1 | -1 | +1 | -1 | 1/3 |
| 20 | 1 | 2 | +1 | +1 | +1 | -1 | 1/2 |
| 21 | 1 | 2 | +1 | -1 | +1 | -1 | 1/2 |
| 22 | 0 | 0 | +1 | +1 | +1 | -1 | 2/3 |
| 23 | 0 | 0 | +1 | -1 | +1 | -1 | 2/3 |

It should be noted that, in Table 9, which DMRS ports in the newly added DMRS port 12 to the newly added DMRS port 23 have m values being 1/3, 1/2, or 2/3 are not limited.

For another example, as shown in Table 10, M=4, and the value of m/M is added to a DMRS parameter table of the type 2. In Table 10, an index 0 to an index 11 are legacy DMRS ports, and all values of m/M are 0; and an index 12 to an index 23 are newly added expanded DMRS ports, all values of m/M corresponding to the DMRS ports with indexes 16, 17, 22, and 23 are 1/2, all values of m/M corresponding to the DMRS ports with indexes 12, 13, 18, and 19 are 1/4, and all values of m/M corresponding to the DMRS ports with indexes 14, 15, 20, and 21 are 3/4. DMRS ports in a CDM group 0 are expanded by four times, and neither DMRS ports in a CDM group 1 nor DMRS ports in a CDM group 2 are expanded.

**Table 10**

| Index $\bar{p}$ | CDM group $\lambda$ | $\Delta$ | $w_f(k')$ | | $w_t(l')$ | | *m/M* |
|---|---|---|---|---|---|---|---|
| | | | $k' = 0$ | $k' = 1$ | $l' = 0$ | $l' = 1$ | |
| 0 | 0 | 0 | +1 | +1 | +1 | +1 | 0 |
| 1 | 0 | 0 | +1 | -1 | +1 | +1 | 0 |
| 2 | 1 | 2 | +1 | +1 | +1 | +1 | 0 |
| 3 | 1 | 2 | +1 | -1 | +1 | +1 | 0 |
| 4 | 2 | 4 | +1 | +1 | +1 | +1 | 0 |
| 5 | 2 | 4 | +1 | -1 | +1 | +1 | 0 |
| 6 | 0 | 0 | +1 | +1 | +1 | -1 | 0 |
| 7 | 0 | 0 | +1 | -1 | +1 | -1 | 0 |
| 8 | 1 | 2 | +1 | +1 | +1 | -1 | 0 |
| 9 | 1 | 2 | +1 | -1 | +1 | -1 | 0 |
| 10 | 2 | 4 | +1 | +1 | +1 | -1 | 0 |
| 11 | 2 | 4 | +1 | -1 | +1 | -1 | 0 |
| 12 | 0 | 0 | +1 | +1 | +1 | +1 | 1/4 |
| 13 | 0 | 0 | +1 | -1 | +1 | +1 | 1/4 |
| 14 | 0 | 0 | +1 | +1 | +1 | +1 | 3/4 |
| 15 | 0 | 0 | +1 | -1 | +1 | +1 | 3/4 |

(continued)

| Index $\bar{p}$ | CDM group $\lambda$ | $\Delta$ | $w_f(k')$ | | $w_t(l')$ | | $m/M$ |
| --- | --- | --- | --- | --- | --- | --- | --- |
| | | | $k' = 0$ | $k' = 1$ | $l' = 0$ | $l' = 1$ | |
| 16 | 0 | 0 | +1 | +1 | +1 | +1 | 1/2 |
| 17 | 0 | 0 | +1 | -1 | +1 | +1 | 1/2 |
| 18 | 0 | 0 | +1 | +1 | +1 | -1 | 1/4 |
| 19 | 0 | 0 | +1 | -1 | +1 | -1 | 1/4 |
| 20 | 0 | 0 | +1 | +1 | +1 | -1 | 3/4 |
| 21 | 0 | 0 | +1 | -1 | +1 | -1 | 3/4 |
| 22 | 0 | 0 | +1 | +1 | +1 | -1 | 1/2 |
| 23 | 0 | 0 | +1 | -1 | +1 | -1 | 1/2 |

It should be noted that, in Table 10, which DMRS ports in the newly added DMRS port 12 to the newly added DMRS port 23 have m values being 1/4, 3/4, or 1/2 are not limited.

In conclusion, if the values of m/M include 0 and 1/2, it indicates to perform uniform DMRS port expansion on the three CDM groups corresponding to the type 2. All the values of m/M of the legacy DMRS ports are 0, and all the values of m/M of the expanded DMRS ports are 1/2.

If the values of m/M include 0, 1/2, 1/3, and 2/3, it indicates to perform non-uniform DMRS port expansion on the three CDM groups corresponding to the type 2. All the values of m/M of the legacy DMRS ports are 0, all the values of m/M of four DMRS ports in the expanded DMRS ports are 1/2, all the values of m/M of four DMRS ports are 1/3, and all the values of m/M of four DMRS ports are 2/3.

If the values of m/M include 0, 1/2, 1/4, and 3/4, it indicates to perform non-uniform DMRS port expansion on the three CDM groups indicated by the type 2. All the values of m/M of the legacy DMRS ports are 0, all the values of m/M of four DMRS ports in the expanded DMRS ports are 1/2, all the values of m/M of four DMRS ports are 1/4, and all the values of m/M of four DMRS ports are 3/4.

In this way, the terminal device obtains M and m/M that are indicated by the network device, and may determine, based on the value of M, the expansion manner of DMRS ports in the at least one of the CDM groups corresponding to the DMRS configuration type, determine the value of m/M based on the DMRS port index, and substitute the value of m/M into the formula (1), to generate the DMRS sequence. The expansion manner of DMRS ports in the CDM group may be determined based on the DMRS sequence generation manner, and the DMRS sequence sent based on the expanded DMRS ports may be determined.

In a third possible implementation, because $e^{j2\hat{k}\pi m/M}$ is a periodic sequence, the network device and the terminal device may preconfigure a plurality of values of the sequence in one periodicity, and then the network device indicates, to the terminal device, which value to be selected.

If a DMRS configuration type is the type 1, and DMRS ports are expanded in all CDM groups indicated by the type 1, all values of m/M of expanded DMRS ports are 1/4. Therefore, a value of $e^{j2\hat{k}\pi m/M}$ in one periodicity (where $\hat{k}$ ranges from 0 to 3) is [1, j, -1, -j].

If DMRS ports are expanded in a part of the CDM groups indicated by the type 1, the value of M is 6, and values of m of a part of the expanded DMRS ports are 1. Therefore, a value of $e^{j2\hat{k}\pi m/M}$ in one periodicity (where $\hat{k}$ ranges from 0 to 5) is [1, $e^{j\pi/3}$, $e^{j2\pi/3}$, $e^{j\pi}$, $e^{j4\pi/3}$, $e^{j5\pi/3}$]. Values of m of a part of the expanded DMRS ports are 2. Therefore, a value of $e^{j2\hat{k}\pi m/M}$ in one periodicity (where $\hat{k}$ ranges from 0 to 2) is [1, $e^{j2\pi/3}$, $e^{j4\pi/3}$]. DCI may be used to indicate one of the two values.

If a DMRS configuration type is the type 2, and DMRS ports are expanded in all CDM groups indicated by the type 2, all values of m/M of expanded DMRS ports are 1/2. Therefore, a value of $e^{j2\hat{k}\pi m/M}$ in one periodicity (where $\hat{k}$ ranges from 0 to 1) is [1, -1].

If DMRS ports in two of three CDM groups indicated by the type 2 are expanded, and DMRS ports in the other CDM group are not expanded, values of m/M of four ports in the expanded DMRS ports are 1/2. Therefore, a value of $e^{j2\hat{k}\pi m/M}$ in one periodicity (where $\hat{k}$ ranges from 0 to 1) is [1, -1]. Values of m/M of four ports are 1/3. Therefore, a value of $e^{j2\hat{k}\pi m/M}$ in one periodicity (where $\hat{k}$ ranges from 0 to 2) is [1, $e^{j2\pi/3}$, $e^{j4\pi/3}$]. All values of m/M of four ports are 2/3. Therefore, a value of $e^{j2\hat{k}\pi m/M}$ in one periodicity (where $\hat{k}$ ranges from 0 to 2) is [1, $e^{j4\pi/3}$, $e^{j8\pi/3}$]. DCI may be used to indicate one of the three values.

If DMRS ports in one of three CDM groups indicated by the type 2 are expanded, and DMRS ports in the other two CDM groups are not expanded, values of m/M of four ports in the expanded DMRS ports are 1/4. Therefore, a value of $e^{j2\hat{k}\pi m/M}$ in one periodicity (where $\hat{k}$ ranges from 0 to 3) is [1, j, -1, -j]. Values of m/M of four ports are 1/2. Therefore, a value of $e^{j2\hat{k}\pi m/M}$ in one periodicity (where $\hat{k}$ ranges from 0 to 1) is [1, -1]. Values of m/M of four ports are 3/4. Therefore, a value of

$e^{j2\hat{k}\pi m/M}$ in one periodicity (where $\hat{k}$ ranges from 0 to 3) is [1, $e^{j3\pi/2}$, $e^{j3\pi}$, $e^{j9\pi/2}$]. DCI may be used to indicate one of the three values.

In this way, the terminal device obtains $e^{j2\hat{k}\pi m/M}$ indicated by the network device, and substitutes the value of $e^{j2\hat{k}\pi m/M}$ into the formula (1), to generate the DMRS sequence. The expansion manner of DMRS ports in the CDM group may be determined based on the DMRS sequence generation manner, and the DMRS sequence sent based on the expanded DMRS ports may be determined.

It may be understood that, to implement the functions in the foregoing embodiments, the network device and the terminal device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraint conditions of the technical solutions.

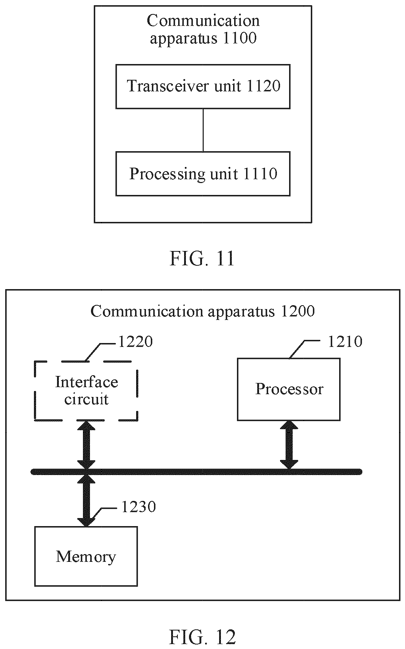

With reference to FIG. 1 to FIG. 10, the foregoing describes in detail a demodulation reference signal sending and receiving method according to this embodiment. With reference to FIG. 11, the following describes a communication apparatus according to this embodiment.

FIG. 11 is a diagram of a structure of a possible communication apparatus according to an embodiment. The communication apparatus may be configured to implement the functions of the terminal device or the network device in the foregoing method embodiments. Therefore, beneficial effects of the foregoing method embodiments can also be implemented. In this embodiment of this application, the communication apparatus may be the terminal device 440 shown in FIG. 4, may be the network device 420 shown in FIG. 4, or may be a module (for example, a chip) used in the terminal device or the network device.

As shown in FIG. 11, the communication apparatus 1100 includes a processing unit 1110 and a transceiver unit 1120. The communication apparatus 1100 is configured to implement the functions of the terminal device 440 or the network device 420 in the method embodiment shown in FIG. 5.

When the communication apparatus 1100 is configured to implement the uplink data sending function of the terminal device in the method embodiment shown in FIG. 4, the transceiver unit 1120 is configured to receive indication information, where the indication information indicates an expansion manner of DMRS ports in at least one of a plurality of CDM groups corresponding to one DMRS configuration type. For example, the transceiver unit 1120 is configured to perform step 520 in FIG. 5.

The transceiver unit 1120 is configured to send DMRSs via DMRS ports obtained through expansion in the at least one CDM group, where the DMRS ports in the at least one CDM group include legacy DMRS ports and expanded DMRS ports. For example, the transceiver unit 1120 is configured to perform step 530 in FIG. 5.

The processing unit 1110 is configured to: determine, based on the indication information, the expansion manner of DMRS ports in the at least one of the CDM groups corresponding to the DMRS configuration type, and generate a DMRS sequence.

When the communication apparatus 1100 is configured to implement the uplink data receiving function of the network device in the method embodiment shown in FIG. 4, the transceiver unit 1120 is configured to send indication information, where the indication information indicates an expansion manner of DMRS ports in at least one of a plurality of CDM groups corresponding to one DMRS configuration type. For example, the transceiver unit 1120 is configured to perform step 510 in FIG. 5.

The transceiver unit 1120 is configured to receive DMRSs via DMRS ports obtained through expansion in the at least one CDM group, where the DMRS ports in the at least one CDM group include legacy DMRS ports and expanded DMRS ports, and the DMRS is used to demodulate uplink data. For example, the transceiver unit 1120 is configured to perform step 540 in FIG. 5.

The processing unit 1110 is configured to: determine the expansion manner of DMRS ports in the at least one of the CDM groups corresponding to the DMRS configuration type, and generate a DMRS sequence.

When the communication apparatus 1100 is configured to implement the downlink data receiving function of the terminal device in the method embodiment, the transceiver unit 1120 is configured to receive indication information, where the indication information indicates an expansion manner of DMRS ports in at least one of a plurality of CDM groups corresponding to one DMRS configuration type.

The transceiver unit 1120 is configured to receive DMRSs via DMRS ports obtained through expansion in the at least one CDM group, where the DMRS ports in the at least one CDM group include legacy DMRS ports and expanded DMRS ports, and the DMRS is used to demodulate downlink data.

The processing unit 1110 is configured to: determine, based on the indication information, the expansion manner of DMRS ports in the at least one of the CDM groups corresponding to the DMRS configuration type, and generate a DMRS sequence.

When the communication apparatus 1100 is configured to implement the downlink data sending function of the network device in the method embodiment, the transceiver unit 1120 is configured to send indication information, where the indication information indicates an expansion manner of DMRS ports in at least one of a plurality of CDM groups corresponding to one DMRS configuration type.

The transceiver unit 1120 is configured to send DMRSs via DMRS ports obtained through expansion in the at least one CDM group, where the DMRS ports in the at least one CDM group include legacy DMRS ports and expanded DMRS ports.

The processing unit 1110 is configured to: determine the expansion manner of DMRS ports in the at least one of the CDM groups corresponding to the DMRS configuration type, and generate a DMRS sequence.

The communication apparatus 1100 according to this embodiment of this application may correspondingly perform the method described in embodiments of this application, and the foregoing and other operations and/or functions of the units in the communication apparatus 1100 are separately used to implement corresponding procedures of the method in FIG. 5. For brevity, details are not described herein again.

As shown in FIG. 12, the communication apparatus 1200 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus 1200 may further include a memory 1230, configured to: store instructions to be executed by the processor 1210, store input data needed by the processor 1210 to run instructions, or store data generated after the processor 1210 runs instructions.

When the communication apparatus 1200 is configured to implement the method shown in FIG. 5, the processor 1210 is configured to perform the functions of the processing unit 1110, and the interface circuit 1220 is configured to perform the functions of the transceiver unit 1120.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements the functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well-known in the art. For example, the storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD).

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more than two. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

In the specification, claims, and accompanying drawings of this application, the terms "first", "second", "third", and the like are intended to distinguish between different objects but do not limit a particular order.

In embodiments of this application, word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A demodulation reference signal DMRS sending method, comprising:

   receiving indication information, wherein the indication information indicates an expansion manner of DMRS ports in at least one of a plurality of code division multiplexing CDM groups corresponding to one DMRS configuration type; and
   sending DMRSs via DMRS ports obtained through expansion in the at least one CDM group, wherein the DMRS ports in the at least one CDM group comprise legacy DMRS ports and expanded DMRS ports, and the DMRS is used to demodulate uplink data.

2. A demodulation reference signal DMRS receiving method, comprising:

   sending indication information, wherein the indication information indicates an expansion manner of DMRS ports in at least one of a plurality of code division multiplexing CDM groups corresponding to one DMRS configuration type; and
   receiving DMRSs via DMRS ports obtained through expansion in the at least one CDM group, wherein the DMRS ports in the at least one CDM group comprise legacy DMRS ports and expanded DMRS ports, and the DMRS is used to demodulate uplink data.

3. A demodulation reference signal DMRS receiving method, comprising:

   receiving indication information, wherein the indication information indicates an expansion manner of DMRS ports in at least one of a plurality of code division multiplexing CDM groups corresponding to one DMRS configuration type; and
   receiving DMRSs via DMRS ports obtained through expansion in the at least one CDM group, wherein the DMRS ports in the at least one CDM group comprise legacy DMRS ports and expanded DMRS ports, and the DMRS is used to demodulate downlink data.

4. A demodulation reference signal DMRS sending method, comprising:

sending indication information, wherein the indication information indicates an expansion manner of DMRS ports in at least one of a plurality of code division multiplexing CDM groups corresponding to one DMRS configuration type; and

sending DMRSs via DMRS ports obtained through expansion in the at least one CDM group, wherein the DMRS ports in the at least one CDM group comprise legacy DMRS ports and expanded DMRS ports, and the DMRS is used to demodulate downlink data.

5. The method according to any one of claims 1 to 4, wherein

when delay spreads of channels of all to-be-scheduled terminal devices are less than a first threshold, the expansion manner indicates to expand DMRS ports in all the CDM groups corresponding to the DMRS configuration type, and the channels comprise an uplink channel and a downlink channel; or

when a delay spread of a channel of a part of the to-be-scheduled terminal devices is greater than or equal to a first threshold, the expansion manner indicates to expand DMRS ports in a part of the plurality of CDM groups corresponding to the DMRS configuration type.

6. The method according to claim 5, wherein the DMRS configuration type comprises a first configuration type; and

when the delay spreads of the channels of all the to-be-scheduled terminal devices are less than the first threshold, DMRS ports in each of two CDM groups corresponding to the first configuration type are expanded by two times; or

when the delay spread of the channel of the part of the to-be-scheduled terminal devices is greater than or equal to the first threshold, in a first CDM group and a second CDM group that correspond to the first configuration type, DMRS ports in the first CDM group are expanded by three times, and DMRS ports in the second CDM group are not expanded.

7. The method according to claim 5 or 6, wherein the DMRS configuration type further comprises a second configuration type; and

when the delay spreads of the channels of all the to-be-scheduled terminal devices are less than the first threshold, DMRS ports in each of three CDM groups corresponding to the second configuration type are expanded by two times;

when a delay spread of a channel of a first part of the to-be-scheduled terminal devices is greater than or equal to the first threshold and less than a second threshold, and a delay spread of a channel of a second part of the terminal devices is greater than or equal to the second threshold, in a third CDM group, a fourth CDM group, and a fifth CDM group that correspond to the second configuration type, DMRS ports in the third CDM group are expanded by three times, DMRS ports in the fourth CDM group are expanded by two times, and DMRS ports in the fifth CDM group are not expanded, wherein the first threshold is less than the second threshold; or

when a delay spread of a channel of a first part of the to-be-scheduled terminal devices is greater than or equal to a second threshold, and a delay spread of a channel of a second part of the terminal devices is less than the first threshold, in a third CDM group, a fourth CDM group, and a fifth CDM group that correspond to the second configuration type, DMRS ports in the third CDM group are expanded by four times, and neither DMRS ports in the fourth CDM group nor DMRS ports in the fifth CDM group are expanded, wherein the first threshold is less than the second threshold.

8. The method according to any one of claims 1 to 7, wherein

the indication information indicates a value of M and a value of m in a coefficient $e^{j2\hat{k}\pi m/M}$;

the indication information indicates a value of m/M in a coefficient $e^{j2\hat{k}\pi m/M}$; or

the indication information indicates a value of a coefficient $e^{j2\hat{k}\pi m/M}$.

9. The method according to any one of claims 1 to 8, wherein

the indication information is predefined; or

the indication information is configured by using control signaling, wherein the control signaling comprises at least one of radio resource control RRC signaling, a media access control control element MAC-CE, and downlink control information DCI.

**10.** A communication apparatus, comprising:

a transceiver unit, configured to receive indication information, wherein the indication information indicates an expansion manner of DMRS ports in at least one of a plurality of code division multiplexing CDM groups corresponding to one DMRS configuration type, wherein
the transceiver unit is configured to send DMRSs via DMRS ports obtained through expansion in the at least one CDM group, wherein the DMRS ports in the at least one CDM group comprise legacy DMRS ports and expanded DMRS ports, and the DMRS is used to demodulate uplink data.

**11.** A communication apparatus, comprising:

a transceiver unit, configured to send indication information, wherein the indication information indicates an expansion manner of DMRS ports in at least one of a plurality of code division multiplexing CDM groups corresponding to one DMRS configuration type, wherein
the transceiver unit is configured to receive DMRSs via DMRS ports obtained through expansion in the at least one CDM group, wherein the DMRS ports in the at least one CDM group comprise legacy DMRS ports and expanded DMRS ports, and the DMRS is used to demodulate uplink data.

**12.** A communication apparatus, comprising:

a transceiver unit, configured to receive indication information, wherein the indication information indicates an expansion manner of DMRS ports in at least one of a plurality of code division multiplexing CDM groups corresponding to one DMRS configuration type, wherein
the transceiver unit is configured to receive DMRSs via DMRS ports obtained through expansion in the at least one CDM group, wherein the DMRS ports in the at least one CDM group comprise legacy DMRS ports and expanded DMRS ports, and the DMRS is used to demodulate downlink data.

**13.** A communication apparatus, comprising:

a transceiver unit, configured to send indication information, wherein the indication information indicates an expansion manner of DMRS ports in at least one of a plurality of code division multiplexing CDM groups corresponding to one DMRS configuration type, wherein
the transceiver unit is configured to send DMRSs via DMRS ports obtained through expansion in the at least one CDM group, wherein the DMRS ports in the at least one CDM group comprise legacy DMRS ports and expanded DMRS ports, and the DMRS is used to demodulate downlink data.

**14.** The apparatus according to any one of claims 10 to 13, wherein

when delay spreads of channels of all to-be-scheduled terminal devices are less than a first threshold, the expansion manner indicates to expand DMRS ports in all the CDM groups corresponding to the DMRS configuration type, and the channels comprise an uplink channel and a downlink channel; or
when a delay spread of a channel of a part of the to-be-scheduled terminal devices is greater than or equal to a first threshold, the expansion manner indicates to expand DMRS ports in a part of the plurality of CDM groups corresponding to the DMRS configuration type.

**15.** The apparatus according to claim 14, wherein the DMRS configuration type comprises a first configuration type; and

when the delay spreads of the channels of all the to-be-scheduled terminal devices are less than the first threshold, DMRS ports in each of two CDM groups corresponding to the first configuration type are expanded by two times; or
when the delay spread of the channel of the part of the to-be-scheduled terminal devices is greater than or equal to the first threshold, in a first CDM group and a second CDM group that correspond to the first configuration type, DMRS ports in the first CDM group are expanded by three times, and DMRS ports in the second CDM group are not expanded.

16. The apparatus according to claim 14 or 15, wherein the DMRS configuration type further comprises a second configuration type; and

when the delay spreads of the channels of all the to-be-scheduled terminal devices are less than the first threshold, DMRS ports in each of three CDM groups corresponding to the second configuration type are expanded by two times;

when a delay spread of a channel of a first part of the to-be-scheduled terminal devices is greater than or equal to the first threshold and less than a second threshold, and a delay spread of a channel of a second part of the terminal devices is greater than or equal to the second threshold, in a third CDM group, a fourth CDM group, and a fifth CDM group that correspond to the second configuration type, DMRS ports in the third CDM group are expanded by three times, DMRS ports in the fourth CDM group are expanded by two times, and DMRS ports in the fifth CDM group are not expanded, wherein the first threshold is less than the second threshold; or

when a delay spread of a channel of a first part of the to-be-scheduled terminal devices is greater than or equal to a second threshold, and a delay spread of a channel of a second part of the terminal devices is less than the first threshold, in a third CDM group, a fourth CDM group, and a fifth CDM group that correspond to the second configuration type, DMRS ports in the third CDM group are expanded by four times, and neither DMRS ports in the fourth CDM group nor DMRS ports in the fifth CDM group are expanded, wherein the first threshold is less than the second threshold.

17. The apparatus according to any one of claims 10 to 16, wherein

the indication information indicates a value of M and a value of m in a coefficient $e^{j2\hat{k}\pi m/M}$;

the indication information indicates a value of m/M in a coefficient $e^{j2\hat{k}\pi m/M}$; or

the indication information indicates a value of a coefficient $e^{j2\hat{k}nm/M}$.

18. The apparatus according to any one of claims 10 to 17, wherein

the indication information is predefined; or

the indication information is configured by using control signaling, wherein the control signaling comprises at least one of radio resource control RRC signaling, a media access control control element MAC-CE, and downlink control information DCI.

19. A communication apparatus, comprising a processor and an interface circuit, wherein the interface circuit is configured to: receive a signal from a communication apparatus other than the communication apparatus and transmit the signal to the processor, or the interface circuit is configured to send a signal from the processor to a communication apparatus other than the communication apparatus, and the processor is configured to implement the method according to any one of claims 1 to 9 by using a logic circuit or executing code instructions.

20. A computer-readable storage medium, wherein the storage medium stores a computer program or instructions; and when the computer program or the instructions are executed by a communication apparatus, the method according to any one of claims 1 to 9 is implemented.

FIG. 1

(a) Mapping type A

(b) Mapping type B    ▮ DMRS

FIG. 2

(a) Configuration type 1

(b) Configuration type 2

FIG. 3

**Mobile communication system 400**

Terminal device 450

Terminal device 440

Downlink signal

Network device 430

Downlink signal

Core network device 410

Uplink signal

Network device 420

Uplink signal

FIG. 4

Terminal device 440

Network device 420

Step 510: Send indication information

Step 520: Receive the indication information

Step 530: Send DMRSs via DMRS ports obtained through expansion in at least one CDM group

Step 540: Receive the DMRSs via the DMRS ports obtained through expansion in the at least one CDM group

FIG. 5

Configuration type 1

CDM group 0
Four DMRS ports
Expansion
multiple of 2

DMRS port 0
DMRS port 1
DMRS port 2
DMRS port 3

CDM group 1
Four DMRS ports
Expansion
multiple of 2

DMRS port 4
DMRS port 5
DMRS port 6
DMRS port 7

(a) A DMRS occupies a single symbol

CDM group 0
Eight DMRS ports
Expansion
multiple of 2

DMRS port 0
⋮
DMRS port 7

CDM group 1
Eight DMRS ports
Expansion
multiple of 2

DMRS port 8
⋮
DMRS port 15

(b) A DMRS occupies double symbols

FIG. 6

Configuration type 1

CDM group 0
Six DMRS ports
Expansion
multiple of 3
{ DMRS port 0 ⋮ DMRS port 5

CDM group 1
Two DMRS ports
{ DMRS port 6
DMRS port 7

(a) A DMRS occupies a single symbol

CDM group 0
12 DMRS ports
Expansion
multiple of 3
{ DMRS port 0 ⋮ DMRS port 11

CDM group 1
Four DMRS ports
{ DMRS port 12 ⋮ DMRS port 15

(b) A DMRS occupies double symbols

FIG. 7

35

Configuration type 2

CDM group 0
Four DMRS ports
Expansion
multiple of 2
{ DMRS port 0 ⋮ DMRS port 3

CDM group 1
Four DMRS ports
Expansion
multiple of 2
{ DMRS port 4 ⋮ DMRS port 7

CDM group 2
Four DMRS ports
Expansion
multiple of 2
{ DMRS port 8 ⋮ DMRS port 11

(a) A DMRS occupies a single symbol

CDM group 0
Eight DMRS ports
Expansion
multiple of 2
{ DMRS port 0 ⋮ DMRS port 7

CDM group 1
Eight DMRS ports
Expansion
multiple of 2
{ DMRS port 8 ⋮ DMRS port 15

CDM group 2
Eight DMRS ports
Expansion
multiple of 2
{ DMRS port 16 ⋮ DMRS port 23

(b) A DMRS occupies double symbols

FIG. 8

**Configuration type 2**

CDM group 0
Six DMRS ports
Expansion
multiple of 3
{ DMRS port 0 ⋮ DMRS port 5

CDM group 1
Four DMRS ports
Expansion
multiple of 2
{ DMRS port 6 ⋮ DMRS port 9

CDM group 2
Two DMRS ports
{ DMRS port 10 DMRS port 11

(a) A DMRS occupies a single symbol

CDM group 0
12 DMRS ports
Expansion
multiple of 3
{ DMRS port 0 ⋮ DMRS port 11

CDM group 1
Eight DMRS ports
Expansion
multiple of 2
{ DMRS port 12 ⋮ DMRS port 19

CDM group 2
Four DMRS ports
{ DMRS port 20 ⋮ DMRS port 23

(b) A DMRS occupies double symbols

FIG. 9

Configuration type 2

CDM group 0
Eight DMRS ports
Expansion
multiple of 4

DMRS
port 0
⋮
DMRS
port 7

DMRS
port 8

CDM group 1
Two DMRS ports

DMRS
port 9

DMRS
port 10

CDM group 2
Two DMRS ports

DMRS
port 11

(a) A DMRS occupies a single symbol

CDM group 0
16 DMRS ports
Expansion
multiple of 4

DMRS
port 0
⋮
DMRS
port 15

DMRS
port 16

CDM group 1
Four DMRS ports

⋮

DMRS
port 19

DMRS
port 20

CDM group 2
Four DMRS ports

⋮

DMRS
port 23

(b) A DMRS occupies double symbols

FIG. 10

Communication
apparatus 1100

Transceiver unit 1120

Processing unit 1110

FIG. 11

Communication apparatus 1200

1220

Interface
circuit

1210

Processor

1230

Memory

FIG. 12

## INTERNATIONAL SEARCH REPORT

| International application No. |
|---|
| **PCT/CN2023/089248** |

**A. CLASSIFICATION OF SUBJECT MATTER**

H04W 16/10(2009.01)i

According to International Patent Classification (IPC) or to both national classification and IPC

**B. FIELDS SEARCHED**

Minimum documentation searched (classification system followed by classification symbols)

IPC:H04W H04B H04L

Documentation searched other than minimum documentation to the extent that such documents are included in the fields searched

Electronic data base consulted during the international search (name of data base and, where practicable, search terms used)

CNTXT; WOTXT; ENTXTC; 3GPP: 解调参考信号, 码分复用, 组, 群, 扩展, 倍, 时延, 延迟, 信道, 端口, DMRS, CDM, group, extend, times, delay, channel, port

**C. DOCUMENTS CONSIDERED TO BE RELEVANT**

| Category* | Citation of document, with indication, where appropriate, of the relevant passages | Relevant to claim No. |
|---|---|---|
| A | WO 2021047759 A1 (HUAWEI TECHNOLOGIES CO., LTD.) 18 March 2021 (2021-03-18) description, paragraphs 89-105 and 124-128 | 1-20 |
| A | CN 111769918 A (HUAWEI TECHNOLOGIES CO., LTD.) 13 October 2020 (2020-10-13) entire document | 1-20 |
| A | CN 111786757 A (TELECOMMUNICATIONS TECHNOLOGY RESEARCH INSTITUTE CO., LTD.) 16 October 2020 (2020-10-16) entire document | 1-20 |
| A | CN 112134661 A (HUAWEI TECHNOLOGIES CO., LTD.) 25 December 2020 (2020-12-25) entire document | 1-20 |
| A | CATT. "PDSCH/PUSCH enhancements for up to 71GHz operation" *3GPP TSG RAN WG1 #106bis-e R1-2109212*, 19 October 2021 (2021-10-19), entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 June 2023** | **21 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/089248**

| Patent document cited in search report | | | Publication date (day/month/year) | Patent family member(s) | | | Publication date (day/month/year) |
|---|---|---|---|---|---|---|---|
| WO | 2021047759 | A1 | 18 March 2021 | EP | 4022817 | A1 | 06 July 2022 |
| | | | | CN | 114450906 | A | 06 May 2022 |
| CN | 111769918 | A | 13 October 2020 | WO | 2020200114 | A1 | 08 October 2020 |
| CN | 111786757 | A | 16 October 2020 | WO | 2020199752 | A1 | 08 October 2020 |
| | | | | TW | 202038652 | A | 16 October 2020 |
| | | | | KR | 20210145275 | A | 01 December 2021 |
| | | | | EP | 3952185 | A1 | 09 February 2022 |
| | | | | US | 2022201712 | A1 | 23 June 2022 |
| CN | 112134661 | A | 25 December 2020 | WO | 2020259406 | A1 | 30 December 2020 |
| | | | | EP | 3979541 | A1 | 06 April 2022 |
| | | | | US | 2022116176 | A1 | 14 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210469096